(19) **Europäisches Patentamt European Patent Office Office européen des brevets**

(11) **EP 3 325 280 B1**

(12) **FASCICULE DE BREVET EUROPEEN**

(45) Date de publication et mention de la délivrance du brevet:
**28.08.2019 Bulletin 2019/35**

(51) Int Cl.:
**B42D 25/36** (2014.01) **B42D 25/324** (2014.01)
**B42D 25/305** (2014.01) **G02B 5/00** (2006.01)

(21) Numéro de dépôt: **16745418.0**

(22) Date de dépôt: **05.07.2016**

(86) Numéro de dépôt international:
**PCT/EP2016/065877**

(87) Numéro de publication internationale:
**WO 2017/012862 (26.01.2017 Gazette 2017/04)**

(54) **DISPOSITIF ET PROCÉDÉ DE CODAGE OPTIQUE D'UNE IMAGE**

VORRICHTUNG UND VERFAHREN ZUR OPTISCHEN CODIERUNG EINES BILDES

DEVICE AND METHOD FOR OPTICALLY ENCODING AN IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2015 FR 1557021**

(43) Date de publication de la demande:
**30.05.2018 Bulletin 2018/22**

(73) Titulaire: **Office National d'Etudes et de Recherches Aérospatiales**
**91120 Palaiseau (FR)**

(72) Inventeurs:
• **BOUCHON, Patrick**
**91370 Verrières-le-Buisson (FR)**
• **JAECK, Julien**
**91300 Massy (FR)**
• **MAKHSIYAN, Mathilde**
**01120 La Boisse (FR)**
• **HAÏDAR, Riad**
**75012 Paris (FR)**

(74) Mandataire: **Osha Liang**
**2, rue de la Paix**
**75002 Paris (FR)**

(56) Documents cités:
**WO-A1-2013/039454**

• **CUI ET AL: "Plasmonic and metamaterial structures as electromagnetic absorbers", LASER PHOTONICS REV., vol. 8, no. 4, 2014, pages 495-520, XP002755452, Wiley Online Library DOI: 10.1002/lpor.201400026 cité dans la demande**
• **HAO ET AL: "High performance optical absorber based on a plasmonic metamaterial", APPLIED PHYSICS LETTERS, vol. 96, no. 251104, 2010, XP002755453, AIP Publishing DOI: 10.1063/1.3442904**

## Description

## ETAT DE L'ART

### Domaine technique

La présente invention concerne un dispositif de codage optique d'une information spatiale de type image ainsi qu'un procédé de codage optique d'une telle information ; l'invention s'applique notamment à la protection contre la contrefaçon d'objets de valeur.

### Etat de l'art

De nombreux dispositifs sont connus pour la protection contre la contrefaçon d'objets de valeurs tels que des bijoux, flacons de parfum, vêtements, cartes bancaires, billets de banque.

Ces dispositifs comprennent par exemple des éléments optiques de sécurité qui procurent des effets visuels variables en fonction de l'angle d'incidence et/ou d'observation, comme des éléments diffractifs, des hologrammes, etc. Il est ainsi possible au moyen de ces éléments optique de marquer les objets de valeur de façon sécurisée par des informations spatiales, par exemple des informations d'identification telles que des images, des caractères alphanumériques, etc.

Parmi les éléments optiques de sécurité, on connait également des dispositifs plasmoniques comprenant des interfaces métal-diélectrique, la couche métallique étant structurée sous forme de réseaux pour permettre le couplage d'une onde incidente de longueur d'onde donnée à un plasmon de surface.

La demande de brevet US 20120015118 décrit par exemple une méthode pour le contrôle de la couleur d'un métal, mettant en oeuvre l'excitation de plasmons de surface sur une interface métal-diélectrique lorsque l'interface est illuminée par une radiation optique incidente. Cette méthode est appliquée notamment à la protection contre la contrefaçon d'objets de valeur tels que des billets de banque. Plus précisément, la demande de brevet ci-dessus citée décrit la formation d'un ensemble de structures métalliques sub longueurs d'onde, agencées de façon répétitive et obtenues par exemple par embossage d'une surface métallique, de telle sorte à permettre le couplage à une longueur d'onde de résonance donnée d'onde lumineuses incidentes avec des plasmons de surface. L'effet optique observé, fortement dépendant de l'angle d'incidence et/ou d'observation, comprend notamment un changement de couleur de la surface métallique, permettant de créer des motifs métalliques de couleur variable sur des objets de valeur à des fins esthétiques et/ou de protection contre la contrefaçon.

Cependant, une structure de couplage gravée sous forme d'un réseau nécessite des dimensions de l'ordre d'une dizaine de longueurs d'onde au minimum pour obtenir un couplage efficace d'une onde lumineuse incidente avec un plasmon de surface, le couplage résultant de l'effet collectif des structures sub-longueurs d'onde. La méthode ainsi décrite dans la demande US 20120015118 n'est de ce fait pas adaptée à la formation de dispositifs de marquage miniatures d'objets à sécuriser, de dimensions typiquement inférieures à quelques dizaines de microns, par exemple pour la protection contre la contrefaçon de petits objets. Par ailleurs, la dépendance angulaire de l'effet visuel obtenu peut être une contrainte forte pour certaines applications comme la bijouterie ou la joaillerie, où l'on cherche à obtenir des couleurs indépendantes de l'angle d'observation.

WO 2013/039454 A1 décrit un dispositif de codage optique de même nature que celui de la revendication 1, sauf que les nano-antennes sont de type Isolant-Métal.

La publication CUI ET AL: "Plasmonic and metamaterial structures as electromagnetic absorbers", LASER PHOTONICS REV., vol. 8, no. 4, 2014, pages 495-520, Wiley Online Library [DOI: 10.1002/lpor.201400026], décrit une structure avec des nano-antennes plasmoniques de type MIM (Metal-Dielectrique-Metal), mais ne codant pas une image comprenant au moins deux pixels de valeurs différentes.

La présente description vise à proposer un dispositif de codage optique permettant le codage spatial de données sur des mailles élémentaires dont les dimensions peuvent être de l'ordre de la longueur d'onde, permettant notamment la réalisation de dispositifs de marquage miniatures pour la protection contre la contrefaçon.

## RESUME

Selon un premier aspect, la présente description concerne un dispositif de codage optique d'au moins une information spatiale ou « image », qui peut être décomposée en pixels définis chacun par une position dans l'image et au moins une valeur, une image comprenant au moins deux pixels de valeurs différentes. Le dispositif de codage est destiné à être observé dans au moins une première bande spectrale d'observation et comprend un support et un ensemble de nano-antennes plasmoniques de type métal - diélectrique - métal formées sur ledit support, telles que :

- chaque nano-antenne plasmonique est résonante à au moins une longueur d'onde comprise dans ladite première bande spectrale d'observation,
- les nano-antennes plasmoniques sont agencées spatialement sur le support de telle sorte à ce qu'à un pixel de l'image soit associé un sous-ensemble d'une ou plusieurs nano-antenne(s) plasmonique(s) dont la réponse optique selon une polarisation et dans une bande spectrale comprise dans la première bande spectrale d'observation correspond à une valeur dudit pixel, l'ensemble des nano-antennes plasmoniques formant ainsi au moins un premier codage spatial de ladite image dans ladite première bande spectrale d'observation.

De façon connue, une nano-antenne plasmonique est résonante à une longueur d'onde donnée $\lambda_R$, appelée longueur d'onde de résonance, si sa longueur, mesurée selon une direction donnée, est égale à $\lambda_R/2np$, où n est l'indice de réfraction du matériau diélectrique formant la structure métal - diélectrique - métal, p est un entier naturel non nul.

Une telle nano-antenne plasmonique présente une résonnance localisée, c'est-à-dire qu'elle est apte à générer une réponse optique dans une bande spectrale centrée autour de la longueur d'onde de résonance, sur une section efficace dont la surface est de l'ordre du carré de la longueur d'onde de résonance.

Par « réponse optique », on entend dans la présente description une réponse optique mesurée en champ lointain, c'est-à-dire à une distance supérieure à deux fois la longueur d'onde ; la réponse optique peut résulter d'une mesure d'un flux lumineux réfléchi ou de la mesure d'un flux émis du fait de l'émission thermique des nano-antennes.

Il est ainsi possible grâce à un arrangement d'un ensemble de nano-antennes plasmoniques, de coder une information spatiale comprenant un ensemble de « pixels » (ou éléments d'information élémentaire) définis chacun par une position et une ou plusieurs valeur(s): les paramètres géométriques (forme, dimensions, orientation) d'une nano-antenne plasmonique agencée sur le support à une position donnée sont choisis pour générer, dans une bande spectrale comprise dans la bande spectrale d'observation, une réponse optique correspondant à la valeur d'un pixel situé à une position correspondante dans l'image.

Un tel dispositif de codage peut être observé en émission (émission thermique des nano-antennes chauffées grâce à une source de chaleur externe) ou en réflexion (sous éclairage avec un flux incident donné). Dans ce dernier cas, l'absorption résonante des nano-antennes se traduit par une modification du spectre de l'onde réfléchie par rapport à l'onde incidente.

La bande spectrale d'observation peut être comprise dans une plage de longueurs d'onde allant de l'UV (300 - 450 nm) au THz (jusqu'à 300 microns).

Selon un ou plusieurs exemples de réalisation, le premier codage spatial comprend un codage en niveaux de gris ; les paramètres géométriques du sous-ensemble d'une ou plusieurs nano-antenne(s) associé à un pixel sont choisis pour générer une réponse optique mesurée selon une polarisation et dans une bande spectrale donnée comprise dans la bande spectrale s'observation, présentant une intensité relative (« niveau de gris ») variable en fonction de la position et correspondant à la valeur du pixel, elle-même définie comme un niveau de gris dans une échelle de niveaux de gris.

Selon un ou plusieurs exemples de réalisation, les matériaux dont sont formées les structures métal-diélectrique-métal constituant les nano-antennes ainsi que la forme des nano-antennes étant choisis, une variation des dimensions et/ou de l'orientation des nano-antennes permet de faire varier l'intensité relative de la réponse optique dans une bande spectrale donnée et/ou selon une polarisation donnée en dégradant les conditions optimales d'absorption ou d'émission résonantes des nano-antennes.

Selon un ou plusieurs exemples de réalisation, un sous-ensemble de nano-antennes plasmoniques associé à un pixel comprend des nano-antennes plasmoniques présentant des longueurs d'onde de résonnance différentes pour une même polarisation ; on obtient alors une réponse optique dans une bande spectrale recouvrant l'ensemble des longueurs d'onde de résonance qui résulte d'une synthèse additive des réponses optiques de chacune des nano-antennes dans le cas d'une observation en émission ou on obtient une réponse optique qui résulte d'une synthèse soustractive des réponses optiques de chacune des nano-antennes dans le cas d'une observation en réflexion. Dans ce cas, un codage en niveaux de gris peut être obtenu en ajustant sur la présence ou non des nano-antennes résonantes aux différentes longueurs d'onde.

Selon un ou plusieurs exemples de réalisation, le premier codage spatial est un codage « en couleurs » de l'image ; un pixel de l'image présentant au moins une première et une deuxième valeurs définis par exemple à des longueurs d'onde distinctes, il est possible d'associer à chaque pixel un sous ensemble de nano-antennes présentant selon une polarisation donnée, au moins une première et une deuxième réponses optiques dans respectivement une première et une deuxième bandes spectrales comprises dans la première bande spectrale d'observation, les première et deuxième réponses optiques correspondant aux première et deuxième valeurs du pixel, afin de reproduire le codage en couleur de l'image.

Selon un ou plusieurs exemples de réalisation, au moins une partie des nano-antennes plasmoniques de l'ensemble de nano-antennes plasmoniques est résonante selon une première polarisation et au moins une partie des nano-antennes plasmoniques de l'ensemble de nano-antennes plasmoniques est résonante selon une deuxième polarisation ; dans ces exemples, les nano-antennes plasmoniques peuvent être agencées spatialement sur le support de telle sorte à former un premier codage spatial d'une première information spatiale ou image, observable selon la première polarisation, et un deuxième codage spatial d'une deuxième information spatiale ou image, observable selon la deuxième polarisation.

Selon un ou plusieurs exemples de réalisation, au moins une partie des nano-antennes plasmoniques de l'ensemble de nano-antennes plasmoniques est résonante dans une première bande spectrale d'observation et au moins une partie des nano-antennes plasmoniques de l'ensemble de nano-antennes plasmoniques est résonante dans une deuxième bande spectrale d'observation ; dans ces exemples, les nano-antennes plasmoniques peuvent être agencées spatialement sur le support de telle sorte à former un premier codage spatial d'une première information spatiale ou image, observable dans la première bande spectrale d'observation, et un deuxième codage spatial d'une deuxième information spatiale ou image, observable dans la deuxième bande spectrale d'observation.

Selon un ou plusieurs exemples de réalisation, les nano-antennes plasmoniques sont réparties selon des mailles élémentaires de formes et de dimensions similaires, chaque maille élémentaire comprenant un des desdits sous-ensembles d'une ou plusieurs nano-antenne(s) plasmonique(s), les dimensions d'une maille élémentaire correspondant par exemple aux dimensions d'un pixel.

Selon un ou plusieurs exemples de réalisation, il est possible au sein d'une même maille élémentaire, de combiner des nano-antennes plasmoniques présentant des longueurs d'onde de résonance différentes pour une même polarisation ; on obtient alors une réponse optique dans une bande spectrale recouvrant l'ensemble des longueurs d'onde de résonance qui résulte d'une synthèse additive des réponses optiques de chacune des nano-antennes dans le cas d'une observation en émission ou on obtient une réponse optique qui résulte d'une synthèse soustractive des réponses optiques de chacune des nano-antennes dans le cas d'une observation en réflexion.

Selon un ou plusieurs exemples de réalisation, il est également possible au sein d'une même maille élémentaire, de combiner des nano-antennes plasmoniques présentant des longueurs d'onde de résonance différentes pour des polarisations orthogonales. Il est ainsi possible de coder une première information spatiale selon une première polarisation et une deuxième information spatiale selon une deuxième polarisation.

Selon un ou plusieurs exemples de réalisation, les nano-antennes plasmoniques sont réparties selon des premières mailles élémentaires de formes et de dimensions similaires, chacune des premières mailles élémentaires présentant une réponse optique dans une première bande spectrale d'observation, et les premières mailles élémentaires sont réparties selon des deuxièmes mailles élémentaires de formes et de dimensions similaires, chacune des deuxièmes mailles élémentaires présentant une réponse optique dans une deuxième bande spectrale d'observation. Cette variante permet notamment le codage de deux informations spatiales dans deux bandes spectrales d'observation différentes.

Selon un ou plusieurs exemples de réalisation, les nano-antennes plasmoniques sont réparties spatialement sur le substrat pour coder au moins dans une première bande spectrale d'observation et selon une polarisation donnée une information spatiale, ou image, formant un code QR.

Selon un ou plusieurs exemples de réalisation, les nano-antennes plasmoniques sont réparties spatialement sur le substrat pour coder au moins dans une première bande spectrale d'observation et selon une polarisation donnée une information spatiale, ou image, formant un motif reconnaissable.

Selon un ou plusieurs exemples de réalisation, l'ensemble des nano-antennes plasmoniques comprend une première couche métallique continue, une deuxième couche continue en matériau diélectrique formée sur la première couche métallique, une troisième couche métallique structurée pour former localement des superpositions métal-diélectrique-métal formant les nano-antennes plasmoniques. Un dispositif de codage ainsi constitué peut être réalisé au moyen de procédés simples et maîtrisés de façon industrielle par des techniques de « nano-imprint ».

Par matériau diélectrique, on entend n'importe quel matériau ou combinaison de matériaux dont la partie imaginaire de l'indice n'excède pas 0,2 dans la bande spectrale d'intérêt.

Selon un ou plusieurs exemples de réalisation, le dispositif de codage comprend en outre un substrat formant le support et sur lequel est déposée la première couche continue en matériau métallique.

Alternativement, le support peut être formé directement par la première couche en matériau métallique. Ainsi par exemple, le support peut être formé directement par une partie métallique d'un objet à sécuriser.

Alternativement, le support peut être formé directement par la deuxième couche en matériau diélectrique, pour des dispositifs de codage de dimensions latérales réduites du fait de l'épaisseur limitée de la deuxième couche en matériau diélectrique (typiquement inférieure au dixième de la longueur d'onde minimale de la bande spectrale d'observation considérée).

Selon un deuxième aspect, la présente description concerne un objet sécurisé muni d'un dispositif de codage selon l'une quelconque des revendications précédentes. L'objet sécurisé est par exemple un objet choisi parmi l'une des catégories suivantes : bijoux, flacons de parfum, vêtements, cartes bancaires, billets de banque, documents d'identité (cartes d'identité, passeports, permis de conduire, etc.) ou tout document de valeur (chèques cadeaux, etc.).

Selon un troisième aspect, la présente description concerne un procédé de codage d'une information spatiale, ou image, dans une bande spectrale d'observation donnée, au moyen d'un dispositif de codage selon le premier aspect.

Selon un ou plusieurs exemples de réalisation, le procédé de codage comprend :

- la décomposition de l'image en pixels, chaque pixel présentant une position dans l'image ;
- l'attribution à chaque pixel d'au moins une valeur de pixel;
- pour chaque pixel, la détermination d'un sous-ensemble d'une ou plusieurs nano-antenne(s) plasmonique(s) dont la réponse optique selon une polarisation et dans une bande spectrale comprise dans la bande spectrale d'observation correspond à la valeur du pixel ;

- la réalisation des structures métal-diélectrique-métal sur le support pour la formation de l'ensemble des nano-antennes.

Selon un ou plusieurs exemples de réalisation, l'image étant décomposée en pixels de formes et de dimensions identiques, le procédé de codage comprend pour chaque pixel la détermination d'une maille élémentaire définie par une position sur le support, une forme et une dimension correspondant respectivement à la position du pixel dans l'image, la forme et la dimension du pixel et, pour chaque maille élémentaire, la détermination dudit ensemble de nano-antennes dont la réponse optique est égale à la valeur du pixel.

BREVE DESCRIPTION DES DESSINS

D'autres avantages et caractéristiques de l'invention apparaîtront à la lecture de la description, illustrée par les figures suivantes :

- FIG. 1A et 1B, des schémas illustrant deux exemples de dispositifs de codage selon la présente description ;
- FIG. 2A et 2B, respectivement un schéma montrant un exemple d'une maille élémentaire d'un dispositif de codage et une vue en coupe de ladite maille élémentaire ;
- FIG. 2C à 2E des courbes montrant respectivement l'émission et l'absorption normalisées de nano-antennes plasmoniques, pour différentes valeurs de longueurs d'onde de résonance dans la bande 3 - 5 $\mu$m ; la luminance du corps noir comparée à des courbes d'émission de nano-antennes plasmoniques, à différentes valeurs de longueurs d'onde de résonance ; un exemple de valeurs en niveaux de gris de la réponse optique en fonction de la largeur de nano-antennes plasmoniques, dans le cas de nano-antennes de forme parallélépipédique rectangle ;
- FIG. 3A à 3H, des schémas illustrant des motifs élémentaires de nano-antennes MDM, adaptés pour la formation d'un dispositif de codage selon la présente description ;
- FIG. 4A à 4D, des schémas illustrant des motifs formés de combinaisons d'antennes MDM pour la formation de mailles élémentaires d'un dispositif de codage selon la présente description ;
- FIG. 5A et 5B, respectivement un exemple de dispositif de codage selon la présente description formé d'un ensemble de mailles élémentaires comprenant des nano-antennes résonantes selon deux polarisations orthogonales, et les réponses optiques de chacune des mailles élémentaires observées dans la bande 8 - 12 microns, selon chacune des polarisations ;

- FIG. 6, un exemple de dispositif de codage selon la présente description formé d'un ensemble de mailles élémentaires comprenant des nano-antennes résonantes selon deux polarisations orthogonales et agencées pour coder un code QR, selon un exemple de réalisation de la présente description ;
- FIG. 7A à 7D, les réponses optiques du dispositif de codage codant le code QR illustré sur la figure 6, selon chacune des polarisations et dans deux bandes spectrales ;
- FIG. 8A, une première réponse , selon une première polarisation et dans une première bande spectrale, d'un dispositif de codage selon la présente description observé en émission, le dispositif de codage comprenant un ensemble de mailles élémentaires comprenant des nano-antennes résonantes selon deux polarisations orthogonales et agencées pour coder une première image selon une polarisation et une deuxième image selon une deuxième polarisation ;
- FIG. 8B, la réponse optique, selon la deuxième polarisation et dans la première bande spectrale, du dispositif de codage dont une première réponse est illustrée sur la figure 8A, observé en émission ;
- FIG. 9A à 9E, les réponses optiques, selon la deuxième polarisation et dans des sous-bandes spectrales de la première bande spectrale, du dispositif de codage dont une première réponse est illustrée sur la figure 8A, observé en émission.
- FIG. 10, les étapes d'un procédé de codage selon un exemple de la présente description.
- FIG. 11A et 11B, deux schémas illustrant des dispositifs adaptés pour l'authentification d'un objet sécurisé respectivement en réflexion, avec une source d'éclairage, et en émission, avec des moyens de chauffe.

DESCRIPTION DETAILLEE

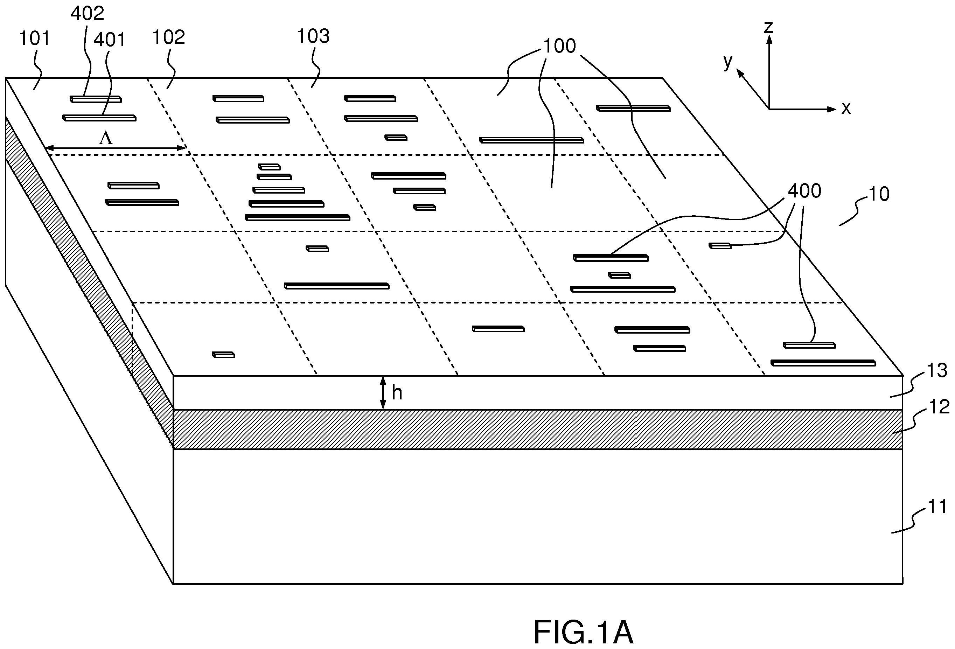

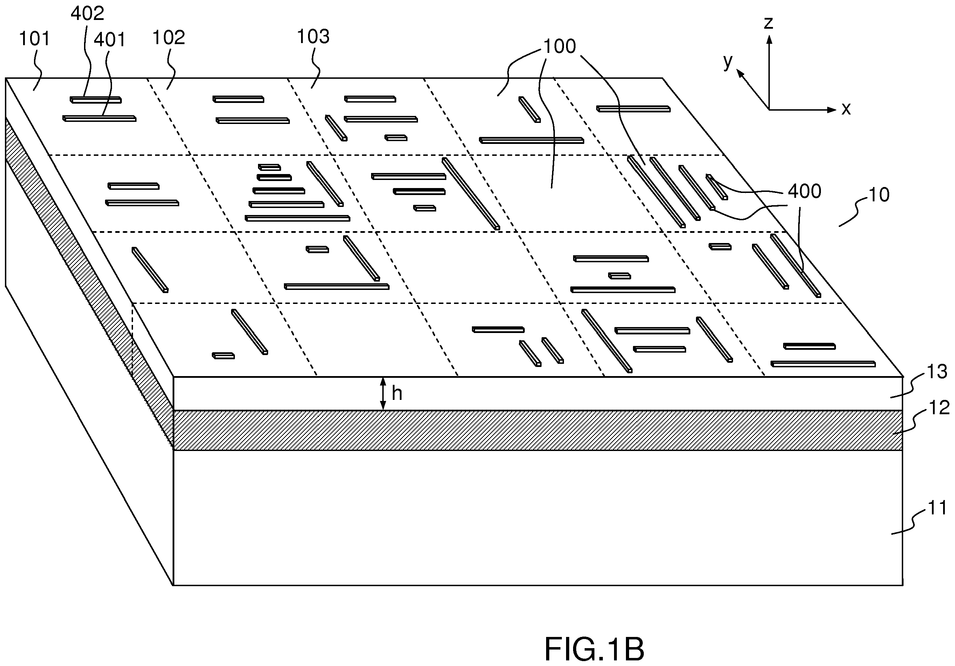

Les Figures 1A et 1B illustrent deux exemples de dispositifs de codage selon la présente description.
Le dispositif de codage 10 comprend, dans chacun de ces exemples, un substrat 11 formant support, une première couche métallique 12 continue, déposée sur ledit substrat, une couche en matériau diélectrique 13 déposée sur la couche en matériau métallique 12 et une deuxième couche métallique structurée pour former un ensemble de « plots » métalliques 400 dont les caractéristiques géométriques sont choisies de telle sorte à former, avec la couche 13 en matériau diélectrique, des structures métal-diélectrique-métal (MDM) formant chacune une nano-antenne plasmonique et qui seront décrits plus en détails par la suite.
Le substrat est par exemple choisi en verre, silicium ou plastique.
Le matériau diélectrique est choisi parmi n'importe quel matériau ou combinaison de matériaux dont la partie imaginaire de l'indice n'excède pas 0,2 dans la bande spectrale d'intérêt et qui, préférentiellement, ne présente pas d'absorption. Par exemple, la couche en matériau diélectrique comprend un oxyde (e.g. silice (SiO2), oxyde de titane (TiO2), oxyde de magnésium (MgO2), alumine (Al2O3), du sulfure de zinc (ZnS), un verre, un matériau plastique ou une résine (e.g. polyméthacrylate de méthyle (PMMA), polytéréphtalate d'éthylène (PET), Capton, benzocyclobutène (BCB)...), un matériau textile (e.g. soie), ou une combinaison de deux couches ou plus de ces matériaux, incluant ou non une couche d'air. Ces matériaux permettent de couvrir le domaine spectral de l'UV jusqu'au THz.

Les première et deuxième couches métalliques sont par exemple choisies en or, aluminium, cuivre, ou argent. L'aluminium et l'argent permettent d'étendre le fonctionnement du dispositif de codage au domaine UV (300-450 nm), et tous ces matériaux fonctionnent du visible jusqu'au THz (typiquement 300 $\mu$m).

Selon un autre exemple de réalisation (non représenté sur les figures), le support peut être formé par l'un ou l'autre de la couche métallique 12 et de la couche en matériau diélectrique 13, auquel cas le substrat 11 n'est pas nécessaire. Lorsqu'il s'agit d'un objet à sécuriser au moyen du dispositif de codage selon la présente description, la couche métallique 12 continue peut être formée par une partie métallique dudit objet et former support.

Comme cela est illustré sur les figures 1A et 1B, les caractéristiques géométriques des plots 400 (forme, dimensions, orientation) sont choisies en fonction de leur position dans le plan du support pour coder une information spatiale ou « image » formée d'un ensemble de pixels définis par une position et une ou plusieurs valeurs (e.g., niveau de gris, couleur).

Plus précisément, dans les exemples de réalisation illustrés sur les figures 1A et 1B, les plots 400 sont regroupés sous forme d'un ensemble de mailles élémentaires 100 de formes et de dimensions similaires, réparties de façon régulière sur le substrat. Les formes des mailles élémentaires peuvent être diverses : carrés, rectangulaires, triangulaires, hexagonales, octogonales, etc. Les mailles élémentaires correspondent chacune à un « pixel » de l'information spatiale que l'on cherche à coder et leurs dimensions sont de ce fait adaptées aux dimensions des pixels. En pratique les dimensions des pixels peuvent être choisies en fonction du dispositif destiné à authentifier le dispositif de codage et plus précisément du détecteur et de l'objectif de formation de l'image sur le détecteur. Ainsi, les dimensions minimales des pixels seront de l'ordre de la moitié de la longueur d'onde maximale de la bande spectrale d'observation, ce qui correspond à la limite de diffraction de l'objectif de formation d'images. En fonction de la dimension d'une maille élémentaire, il pourra y avoir une ou un sous-ensemble de nano-antennes par maille élémentaire, résonantes à une même longueur d'onde ou à différentes longueurs d'onde.

Dans les exemples des figures 1A et 1B, chaque maille élémentaire comprend un sous-ensemble de plots 400 formant des nano-antennes plasmoniques. Les plots sont des parallélépipèdes rectangles dont la longueur définit la longueur d'onde de résonance. Ils sont orientés selon une direction dans l'exemple de la figure 1A, tandis que dans l'exemple de la figure 1B, les plots sont des parallélépipèdes rectangles orientés selon deux directions perpendiculaires.

Dans l'exemple de la figure 1A, la réponse optique s'observe selon une polarisation et résulte d'une synthèse additive des réponses optiques de chacune des nano-antennes dans le cas d'une observation en émission ou résulte d'une synthèse soustractive des réponses optiques de chacune des nano-antennes dans le cas d'une observation en réflexion.

La réponse optique d'une maille élémentaire dans le cas de l'exemple de la figure 1B diffère selon que l'on observe le dispositif de codage en polarisation TM ou TE et résulte, comme dans l'exemple de la figure 1A, d'une synthèse additive ou soustractive des réponses de chaque nano-antenne de la maille élémentaire, selon l'une ou l'autre des polarisations. Un dispositif de codage tel que représenté sur la figure 1B permet ainsi le codage de deux informations spatiales, une première information spatiale selon une première polarisation et une deuxième information spatiale selon une deuxième polarisation. En pratique, l'observation d'un dispositif de codage tel que représenté sur la figure 1B et codant les première et deuxième informations spatiales peut se faire en réflexion ou en émission à travers un polariseur dont l'axe est orienté selon l'une ou l'autre des polarisations.

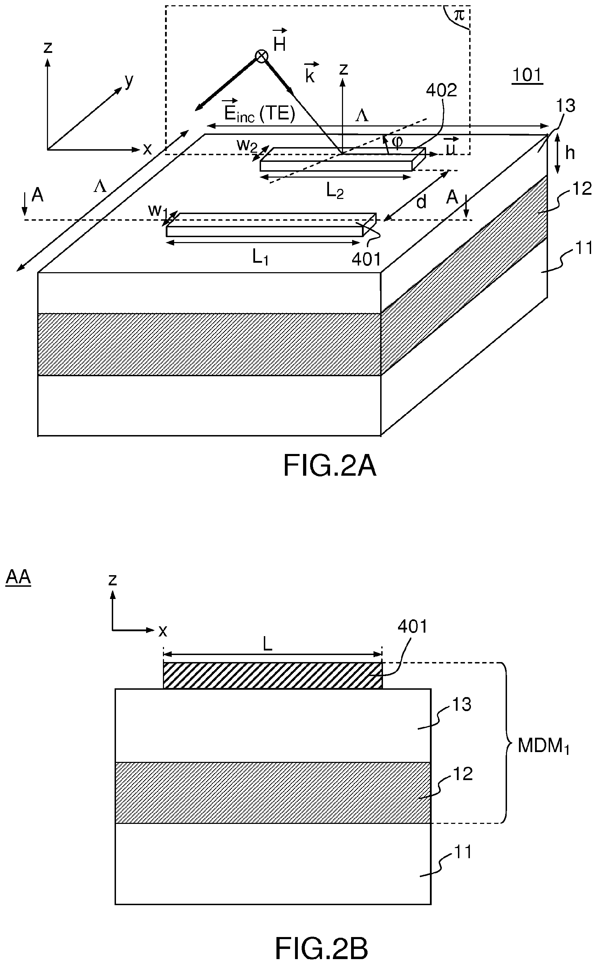

Les figures 2A et 2B illustrent respectivement un schéma d'une maille élémentaire 101 d'un dispositif de codage tel qu'illustré sur les figures 1A ou 1B et une vue en coupe de cette maille élémentaire.

Dans cet exemple, la maille élémentaire est carrée, et présente un côté de dimension A. Sur la maille élémentaire 101 sont agencés deux plots métalliques 401, 402 de forme parallélépipédique, de dimensions respectives $(L_1, w_1)$, $(L_2, w_2)$, séparées d'une distance d, orientés selon une même direction qui définit la polarisation de l'onde absorbée (ou émise). La figure 2B représente une vue en coupe au niveau du plot 401.

La hauteur des plots est avantageusement supérieure à l'épaisseur de peau du métal (typiquement 25 nm pour l'or de 600 nm à 12 $\mu$m) afin d'éviter les fuites de la cavité MDM via la couche métallique supérieure.

Il est connu qu'une structure métal - diélectrique - métal ainsi formée au niveau de chacun des plots métalliques 401, 402 forme une nano-antenne plasmonique présentant une longueur d'onde de résonance (respectivement $\lambda_{R1}$, $\lambda_{R2}$) fonction de la longueur de la nano-antenne (respectivement $L_1$, $L_2$) et du choix du matériau diélectrique. On montre qu'en première approximation (voir par exemple Cui et al., Laser & Photonics Review pp 500 - 502 (2014)), la longueur $L_i$ d'une nano-antenne rectangulaire fixe la longueur d'onde de résonance $\lambda_{Ri}$ à

10% près selon l'équation (1) ci-dessous:

$$\lambda_{Ri} \approx 2\, n_D\, L_i \qquad (1)$$

Où $n_D$ est l'indice de réfraction du matériau diélectrique.

Une telle nano-antenne présente une absorption extraordinaire d'une onde incidente à ladite longueur d'onde et pour une polarisation dite transverse (TE) de l'onde lumineuse incidente, c'est-à-dire pour la composante de l'onde lumineuse incidente dont le champ magnétique **H** est perpendiculaire à la direction de la nano-antenne selon laquelle est mesurée la longueur L; (voir figure 2A). Une telle nano-antenne présente également une émission extraordinaire à ladite longueur d'onde d'une onde lumineuse présentant une polarisation transverse, la réponse en émission (ou luminance) de la nano-antenne à une température T donnée étant le produit de l'émission résonante (émissivité) avec l'émission du corps noir à la température T (luminance du corps noir).

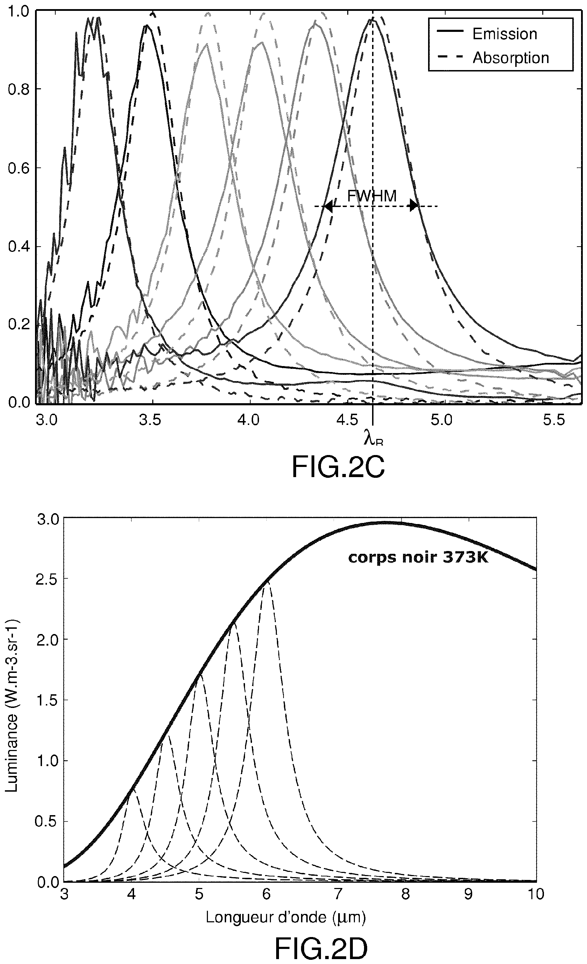

La figure 2C illustre ainsi des courbes montrant l'absorption (en pointillé) et l'émission (trait plein) de nano-antennes plasmoniques présentant différentes longueurs d'onde de résonance.

La figure 2D représente la courbe de luminance du corps noir à 373K et des nano-antennes plasmoniques de type MDM optimisées pour absorber 100% du flux (émissivité de 1) à différentes longueurs d'onde de résonance (4, 4,5, 5, 5,5 et 6 $\mu$m).

Le facteur de qualité Q d'une telle nano-antenne, égal au rapport entre la longueur d'onde de résonance $\lambda_{Ri}$ et la largeur à mi-hauteur de la résonance (FWHM), une fois les matériaux choisis, dépend de façon connue de plusieurs paramètres géométriques tels que l'épaisseur e de la couche en matériau diélectrique, la largeur $l$ et la longueur L de la nano-antenne. En travaillant avec une épaisseur e donnée de la couche en matériau diélectrique, comprise entre $\lambda_{Ri}$/100 et $\lambda_{Ri}$/5 il est ainsi possible de faire varier la réponse optique en réflexion ou en émission d'une nano-antenne à une longueur d'onde d'observation donnée, de 0% à 100% et selon une polarisation donnée, en jouant sur la largeur, la longueur ou l'orientation. La détermination de ces paramètres pour obtenir une réponse donnée peut se faire au moyen de logiciels de calcul connus, comme le logiciel Comsol©.

Le domaine spectral de fonctionnement d'une nano-antenne ne dépend donc que du choix du matériau diélectrique et peut aller de l'UV (à partir de 350 nm) au THz (jusqu'à 300 $\mu$m.).

Dans l'exemple illustré sur la figure 2A, le choix de deux plots métalliques agencés dans la même direction mais de longueurs différentes permet une résonance des nano-antennes ainsi formées à deux longueurs d'onde de résonance différentes, pour une même polarisation. Il en résulte au niveau de la maille 101 une réponse optique qui est une synthèse additive ou soustractive des réponses de chacune des nano-antennes, selon que l'on observe le dispositif de codage en émission ou en réflexion, des réponses des deux nano-antennes formées par les plots 401, 402.

Ainsi, au moyen des nano-antennes de forme parallélépipédique rectangle telles que décrites sur les figures 2A et 2B, ou dans les exemples des figures 1A et 1B, il est possible de réaliser un codage d'une ou plusieurs informations spatiales, en couleurs ou en niveau de gris, pour une observation en réflexion ou en émission, selon une polarisation donnée et/ou à une longueur d'onde donnée ou dans une plage d'observation donnée. Les paragraphes suivant donnent des exemples de codage en niveaux de gris ou en couleurs, utilisant des nano-antennes de forme rectangulaire.

Exemples de codage d'une information spatiale en niveau de gris :

On part d'une image en niveaux de gris, par exemple une image à deux dimensions, pixellisée. A chaque pixel est donc associée une valeur de pixel, qui est un niveau de gris.

Selon une première variante, on cherche à reproduire ce niveau de gris en réflexion ou en émission dans une bande spectrale de mesure centrée sur une longueur d'onde $\lambda$ comprise dans la bande spectrale d'observation.

Selon une première variante, la bande spectrale de mesure présente une largeur typiquement de $\lambda$/10, et correspondant à la largeur de la réponse d'une nano-antenne résonante à la longueur d'onde d'observation (voir figure 2C). En pratique, la mesure peut se faire à travers un filtre approprié.

Pour obtenir le niveau de gris, on utilise selon cet exemple une nano-antenne de type métal-diélectrique-métal de forme rectangulaire, comme précédemment décrite. La longueur L de la nano-antenne fixe la longueur d'onde du maximum d'absorption ou d'émission thermique (voir équation 1).

En choisissant adéquatement l'épaisseur du diélectrique (qui ensuite est un paramètre fixe pour toutes les nano-antennes), il est ainsi possible selon un premier exemple d'obtenir tous les niveaux d'absorption ou d'émission de « 0% » à « 100% » en modifiant la largeur de la nano-antenne, ce qui entraîne de façon connue une modification de l'efficacité de la nano-antenne par rapport à une largeur calculée pour optimiser la réponse. Par exemple en absorption, le niveau « 0% » pourra correspondre en pratique au mieux à l'absorption résiduelle du métal, typiquement de l'ordre de 5% dans le visible, 2 - 3 % dans l'infrarouge et 1% dans le THz, mais avec une variabilité qui dépend de la nature du métal.

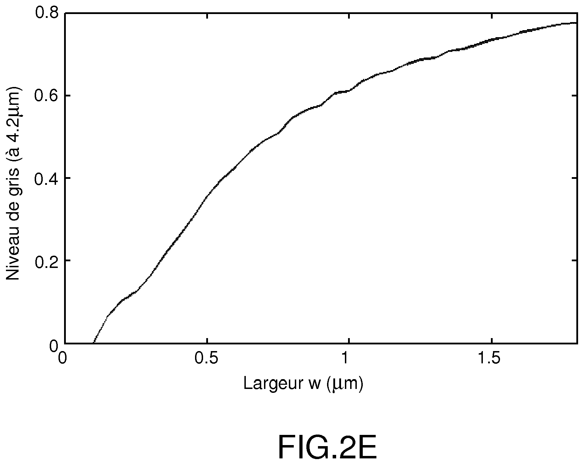

La figure 2E montre ainsi des réponses optiques mesurées en réflexion à 4,2 $\mu$m en fonction de la largeur w de nano-antennes plasmoniques pour une nano-antenne de longueur 1,2 $\mu$m, un matériau diélectrique en silice (épaisseur 220 nm, indice 1,4). Dans cet exemple, le métal est de l'or et la couche métallique continue présente une épaisseur uniforme supérieure à 100 nm donc optiquement opaque. On observe dans cet exemple que pour une largeur de la nano-antenne d'environ 100 nm, la réflexion est minimale (l'absorption est maximale) ; en faisant varier la largeur, on augmente la réflexion, cette augmentation résultant d'une moins bonne absorption par la nano-antenne.

Le pixel peut être encodé sur une maille élémentaire dont les dimensions minimales sont de $\lambda/2$, correspondant à la limite de diffraction en-dessous de laquelle on ne pourra décerner de structuration en champ lointain. Si l'on cherche à avoir un pixel de côté plus grand que $\lambda$, on peut mettre plusieurs nano-antennes par maille élémentaires. Par exemple, si l'on cherche un pixel de côté $\sim N^*\lambda$, alors on pourra répéter périodiquement la nano-antenne, par exemple avec une période dans les 2 directions de $\sim\lambda/2$.

Selon un deuxième exemple, et dans le cas de pixels de dimensions très grandes devant $\lambda$, on peut obtenir le niveau de gris grâce à la densité de nano-antennes uniquement.

Selon un troisième exemple, on peut aussi obtenir le niveau de gris dans la bande spectrale donnée de largeur égale à typiquement $\lambda/10$, en augmentant/diminuant la longueur de la nano-antenne. En effet, la réponse de l'antenne est typiquement Lorentzienne (voir figure 2C) ; ainsi, lorsqu'on modifie la longueur de l'antenne, on décale en longueur d'onde la longueur d'onde de résonance et de ce fait, la réponse est plus faible dans la bande spectrale d'observation.

Dans le cas d'un fonctionnement en émission des nano-antennes (figure 2D), un codage en niveau de gris peut également être obtenu en modifiant la longueur du barreau formant la nano-antenne plasmonique, ce qui résulte dans un déplacement de la courbe d'émission de la nano-antenne sur la courbe du corps noir et de ce fait une modification de la réponse optique.

Selon un quatrième exemple, on peut obtenir le niveau de gris en jouant sur l'orientation de l'antenne rectangulaire dans le plan. Si l'antenne optimisée est suivant l'axe **u**, on aura le niveau de gris de $\cos(\varphi)^2$ pour la même antenne pivotée de $\varphi$.

Selon une deuxième variante, la bande spectrale pour la mesure de la réponse optique peut être plus large. Dans ce cas, un niveau de gris peut être obtenu en combinant plusieurs nano-antennes, par exemple plusieurs nano-antennes de longueurs différentes présentant chacune une longueur d'onde de résonance propre dans la bande spectrale d'observation. Le niveau de gris peut alors être obtenu en ajustant la réponse de chaque nano-antenne selon l'un des exemples décrits ci-dessus (largeur de l'antenne, orientation, densité), soit par l'absence de certaines antennes.

Selon l'une ou l'autre des variantes/exemples décrits, on comprend qu'il est possible de coder plusieurs informations spatiales indépendantes. On peut coder par exemple plusieurs informations dans plusieurs bandes spectrales d'observation. Le choix d'un filtre adapté permettra l'observation d'une information donnée. On peut coder des informations spatiales indépendantes selon les deux polarisations orthogonales. Le choix d'un polariseur adapté lors de l'observation permettra l'observation d'une information donnée.

Exemples de codage d'une information spatiale en couleurs :

On part dans cet exemple d'une information spatiale en couleurs, par exemple une image à deux dimensions, pixellisée. Pour chaque pixel de l'image, on peut par exemple définir un niveau « RGB » (rouge vert bleu), qui donne une couleur parmi un nombre de couleurs possibles identifiées, par exemple 16 millions de couleurs possibles.

Selon un exemple, pour chacune des 3 couleurs, on peut définir une image en niveau de gris et l'encoder suivant le procédé précédemment décrit d'encodage en niveau de gris. Ainsi, pour un pixel donné, on choisit 3 nano-antennes résonantes à trois longueurs d'onde croissantes $\lambda_{r1}$, $\lambda_{r2}$ et $\lambda_{r3}$. L'observation peut se faire à l'œil nu, au moyen d'une caméra multi spectrale avec des filtres RGB sur chaque pixel ou à travers trois filtres respectivement. Ces trois longueurs d'onde sont avantageusement spectralement écartées d'au moins $\lambda_{r3}/10$. Le niveau de gris de chaque antenne peut être déterminé par exemple par la largeur de l'antenne ou par son orientation (réponse polarisée uniquement). Il est également possible d'ajuster le niveau de gris de chaque antenne en jouant sur sa longueur si la séparation spectrale entre les 3 longueurs d'onde de résonance est grande, i.e. en modifiant la longueur pour obtenir un niveau plus faible d'absorption, on ne crée pas un signal dans la $2^{\text{ème}}$ bande spectrale d'intérêt. Cela se traduit en pratique par une séparation spectrale d'au moins $\lambda_{r3}/5$.

Comme précédemment, le pixel peut être encodé sur une maille élémentaire dont les dimensions minimales sont de $\lambda_{r3}/2$, correspondant à la limite de diffraction en-dessous de laquelle on ne pourra décerner de structuration en champ lointain.

Il est ainsi possible de coder plusieurs informations en couleur dans différentes bandes spectrales, par exemple une image dans le visible et une image dans l'infrarouge. En pratique, les 2 pixels d'encodage présentent des dimensions qui sont des multiples l'une de l'autre (par exemple, une grille d'encodage visible avec des pixels de 250 nm et une grille infrarouge avec des pixels de $2\mu m$), chaque pixel infrarouge contenant 64 pixels visible.

Il est également possible de coder une ou plusieurs informations selon l'une ou l'autre des polarisations.

Il est également possible de coder une ou plusieurs informations en niveaux de gris et une ou plusieurs informations en couleur, dans une ou plusieurs bandes spectrales, selon l'une ou l'autre des polarisations.

Bien qu'un mode de réalisation particulier vient d'être décrit mettant en oeuvre des nano-antennes formées au moyen de plots de forme parallélépipédique rectangle, il est connu par l'homme du métier que des nano-antennes de formes différentes peuvent être réalisées et que la forme des plots métalliques pour la formation des nano-antennes plasmoniques n'est pas limitée à des parallélépipèdes rectangles.

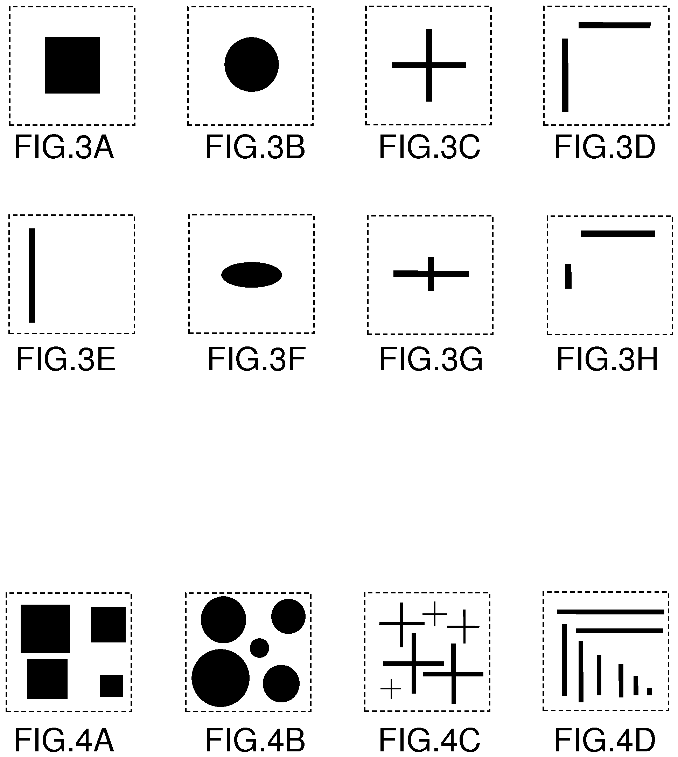

Ainsi, les figures 3A à 3H représentent selon des vues de dessus un ensemble de plots métalliques adaptés pour la formation de structures métal-diélectrique-métal formant des nano-antennes plasmoniques. Les structures présentant en vue de dessus des formes de type plot carré (FIG. 3A), cercle (FIG. 3B), croix (FIG. 3C) et combinaison de rectangles de même longueur et selon deux axes perpendiculaires (FIG. 3D) présentent des réponses insensibles à la polarisation Les structures présentant en vue de dessus des formes de type rectangle (FIG. 3E), ellipse (FIG. 3F), croix asymétrique (FIG. 3G) et combinaison de plusieurs rectangles de longueurs différentes selon des axes perpendiculaires (FIG. 3H) ont une réponse optique qui dépend de la polarisation.

Les figures 3E, 3D et 3H présentent des combinaisons de plots de forme parallélépipède rectangle déjà décrits au moyen des figures 2A à 2D. La réponse optique peut varier en « couleur » ou en niveau de gris comme cela a précédemment été décrit. Les figures 3C et 3G présentent des nano-antennes plasmoniques qui en vue de dessus ont des formes de croix. Ces structures ont des comportements sensiblement similaires aux comportements respectivement des nano-antennes représentées sur les figures 3D (rectangles de même longueur) et 3G (rectangles de longueurs différentes) et présentent des règles de dimensionnement décrites par exemple dans Cui et al., Laser & Photonics Review 8, 495 (2014).

Des nano-antennes plasmoniques obtenus au moyen de plots métalliques carrés (voir figure 3A) ont par exemple été décrits dans Cui et al., Laser & Photonics Review 8, 495 (2014). Les règles de dimensionnement sont similaires à celles des nano-antennes de forme parallélépipédique rectangle mais ils présentent une réponse optique indépendante de la polarisation. Dans le cas de nano-antennes de forme carrée, un codage en niveau de gris peut être obtenu en observant dans une bande spectrale d'observation donnée et en faisant varier la dimension du carré, comme cela a été décrit précédemment.

Des nano-antennes plasmoniques présentant en vue de dessus une forme circulaire sont par exemple été décrits dans le même article de revue Cui et al., Laser & Photonics Review 8, 495 (2014). Là encore, la réponse optique est indépendante de la polarisation et les règles de dimensionnement sont sensiblement similaires à celles des nano-antennes plasmoniques de forme carrée. De la même manière que pour les nano-antennes de forme carrée, un codage en niveau de gris peut être obtenu en observant dans une bande spectrale d'observation donnée et en faisant varier le diamètre du cercle.

Des nano-antennes plasmoniques présentant en vue de dessus une forme elliptique ont des règles de dimensionnement sensiblement similaires à celles des nano-antennes plasmoniques de forme rectangulaire.

D'autres motifs (étoile, triangle, croix plus complexe, etc.) sont également possibles mais présentent l'inconvénient d'une moins grande souplesse pour concevoir la réponse optique de la maille.

Les figures 4A à 4D illustrent, également selon des vues de dessus, des mailles élémentaires dans lesquelles sont associées des nano-antennes plasmoniques présentant différentes formes géométriques.

Chaque nano-antenne ayant une longueur de résonance propre, une maille élémentaire ainsi conçue permet de générer une réponse optique qui résulte d'une synthèse additive ou soustractive, selon que l'on observe le dispositif de codage en émission ou en réflexion, des réponses des différentes nano-antennes. Dans le cas d'un codage spectral de l'information, cela permet d'accéder à un plus grand nombre de réponses optiques ou « couleurs ». Là encore dans cet exemple, certaines des mailles élémentaires présentent des réponses insensibles à la polarisation (FIG. 4A, FIG. 4B, 4C) tandis que la FIG. 4D illustre un exemple dans lequel la « couleur » dépend de la polarisation.

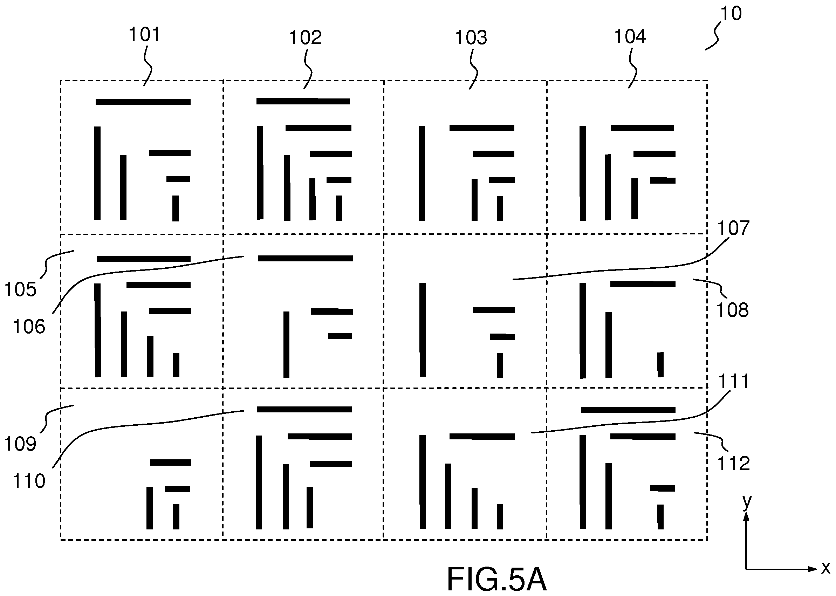

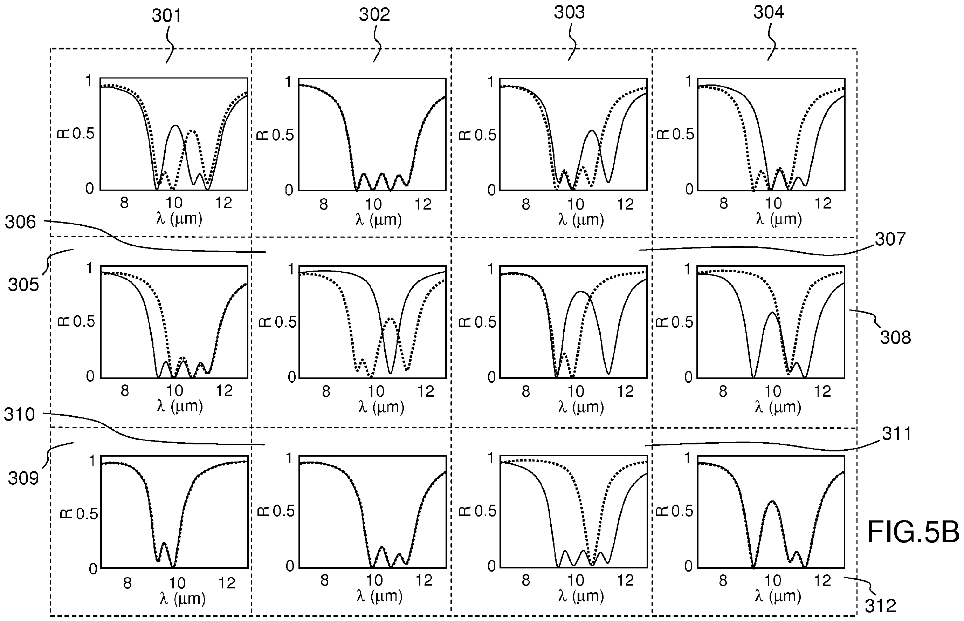

Les figures 5 à 9 illustrent plus en détails des exemples de réalisation du dispositif de codage selon la présente description. Ils mettent en oeuvre des nano-antennes de forme rectangulaire mais pourraient tout aussi bien être conçus avec des nano-antennes présentant différentes formes comme celles décrites précédemment, le choix dépendant notamment du souhait d'avoir des nano-antennes sont les réponses optiques sont polarisées ou non.

Les figures 5A et 5B illustrent un exemple d'application d'un dispositif de codage 10 selon la présente description, permettant un premier codage spectral selon une première polarisation et un deuxième codage spectral selon une deuxième polarisation, le dispositif étant destiné à être observé en réflexion dans une bande spectrale donnée.

La figure 5A représente le dispositif de codage 10 vu de dessus ; seules les formes des mailles élémentaires et des nano-antennes plasmoniques agencées dans chacune des mailles sont représentées. Le dispositif de codage est composé de 12 mailles élémentaires 101 - 112, identiques, de forme carrée, dont la dimension est adaptée à la dimension du pixel de l'information que l'on cherche à coder. Au sein de chaque maille élémentaire sont associées des nano-antennes plasmoniques présentant des réponses selon chacune des deux polarisations. Les nano-antennes horizontales (selon x) codent pour la polarisation TM et les antennes verticales (selon y) codent pour la polarisation TE. Dans cet exemple, chaque nano-antenne plasmonique présente une forme rectangulaire agencée selon l'une ou l'autre de deux directions perpendiculaires. Dans chaque maille élémentaire, il peut avoir jusqu'à 4 nano-antennes plasmoniques de longueurs différentes selon une direction, qui présentent donc dans la bande spectrale d'observation 4 longueurs d'onde de résonance différentes.

La présence ou non de chacune des nano-antennes de longueurs différentes permet de former selon chaque polarisation $2^4 = 16$ réponses optiques différentes dans la bande spectrale d'observation, lorsque le dispositif de codage est observé en réflexion ou en émission. La figure 5B illustre ainsi les réponses optiques 301 - 312 en fonction de la longueur d'onde calculées pour chaque maille élémentaire selon chacune des polarisations TE et TM (les spectres sont représentés respectivement en trait plein (TE) et en trait pointillé (TM)).

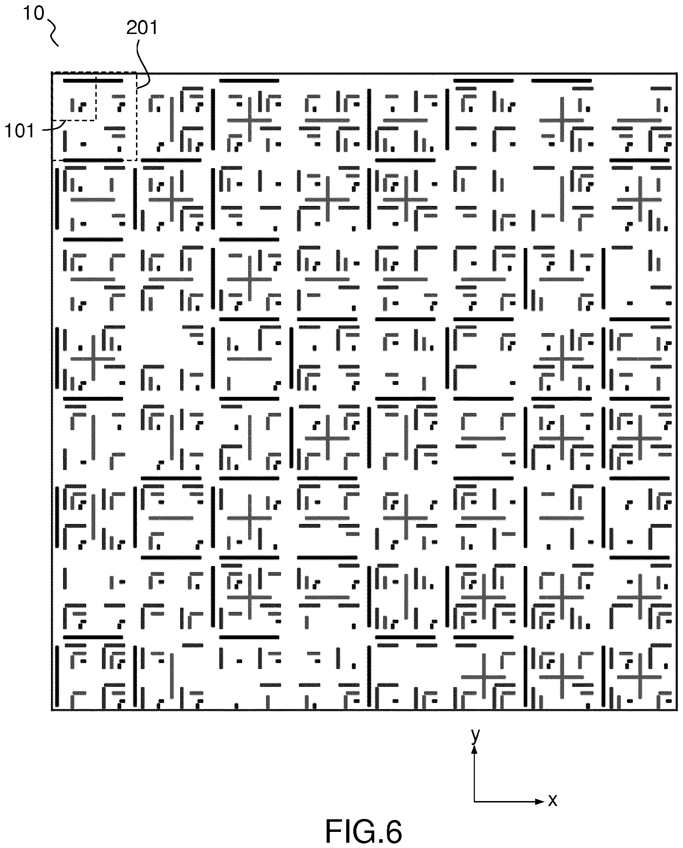

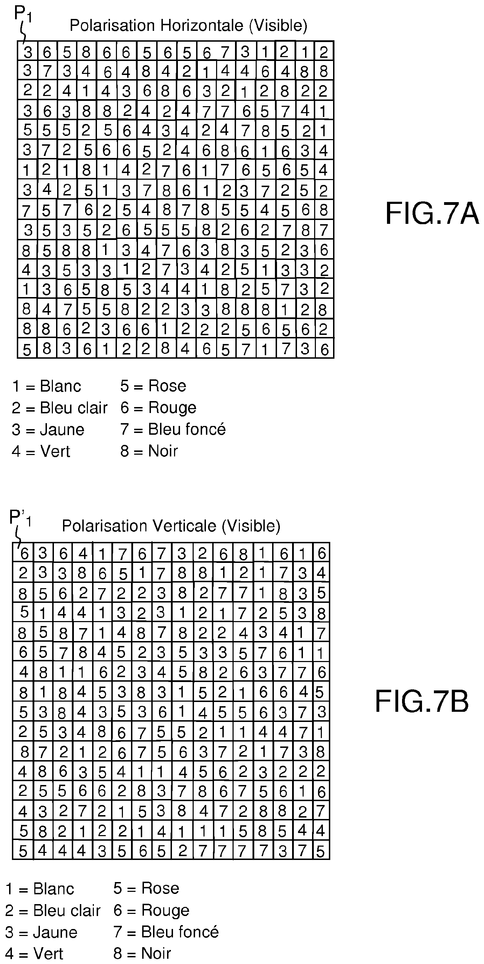

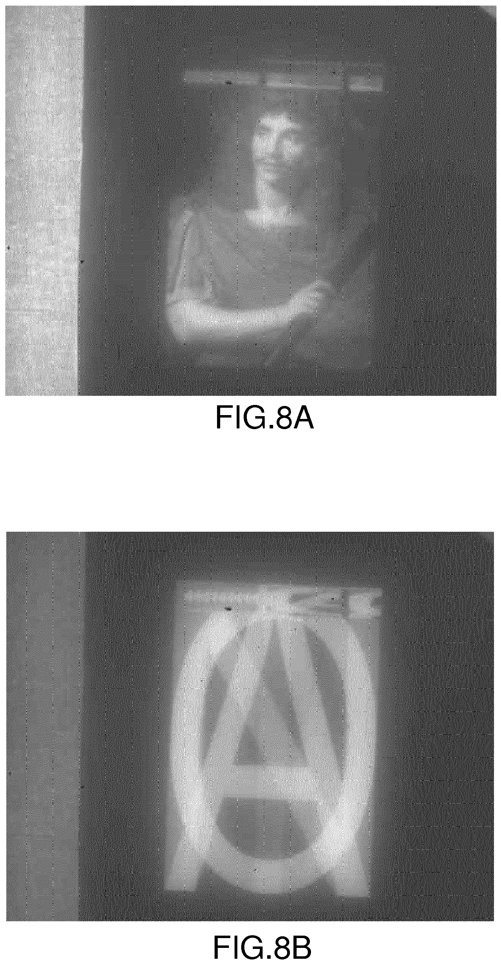

La figure 6 représente un exemple de dispositif de codage 10 appliqué à la réalisation d'un code de type QR (abréviation de « Quick Response ») ou code de type code-barres à deux dimensions, en couleurs, observable dans deux bandes spectrales (visible et infrarouge) et selon deux polarisations (TE, TM). Les figures 7A, 7B et 8A, 8B représentent les réponses optiques dans chacune des bandes spectrales.

La figure 6 comprend un premier ensemble de mailles élémentaires 100 et un deuxième ensemble de mailles élémentaires 200, les mailles élémentaires 200 comprenant chacune un sous-ensemble de mailles élémentaires 100.

Les mailles élémentaires 100 sont dimensionnées pour former une réponse optique dans le visible, selon deux polarisations orthogonales. Ainsi, chaque maille élémentaire comprend un premier ensemble de nano-antennes orientées selon une première direction (par exemple des nano-antennes de forme parallélépipédique) pour le codage d'une première information selon une première polarisation et un deuxième ensemble de nano-antennes orientées selon une direction perpendiculaire pour le codage d'une deuxième information selon une deuxième polarisation. Plus précisément, les nano-antennes représentées horizontalement (selon x) sur la figure 6 codent pour la polarisation « verticale » ou TM et les nano-antennes représentées verticalement (selon y) sur la figure 6 codent pour la polarisation « horizontale » (ou TE). Le codage est dans cet exemple un codage « en couleurs » tel qu'il a été décrit précédemment. Ainsi, chaque nano-antenne peut prendre une longueur parmi trois longueurs permettant une absorption résonante à l'une des trois longueurs d'onde de résonance $\lambda_{r1}$, $\lambda_{r2}$ et $\lambda_{r3}$ situées respectivement dans le bleu, le vert et le rouge. Dans cette exemple, chaque nano-antenne est soit présente, soit absente, ce qui résulte en 8 combinaisons possibles permettant de former 8 couleurs, à savoir rouge, bleu foncé, vert, blanc, noir, rose, bleu clair et jaune, comme cela est illustré sur les figures 7A et 7B. L'observation peut se faire à l'oeil nu, mais aussi par toutes caméras/appareils photos.

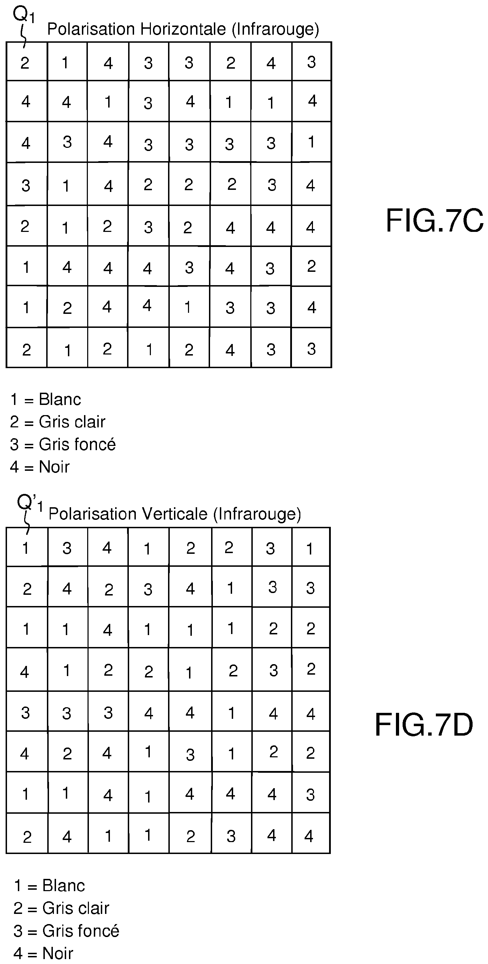

Les mailles élémentaires 200 sont dimensionnées pour former une réponse optique dans l'infrarouge (autour de 2 - 3 µm), également selon deux polarisations orthogonales. Dans cet exemple, chaque maille élémentaire 200 comprend un premier ensemble d'au plus 2 nano-antennes orientées selon une première direction pour le codage d'une première information dans l'infrarouge selon une première polarisation et un deuxième ensemble d'au plus 2 nano-antennes orientées selon une direction perpendiculaire pour le codage d'une deuxième information dans l'infrarouge selon une deuxième polarisation. Le codage est également dans cet exemple un codage « en couleurs » tel qu'il a été décrit précédemment. Chaque nano-antenne peut prendre une longueur parmi deux longueurs permettant une absorption résonante à l'une des deux longueurs d'onde de résonance $\lambda_{r4}$, $\lambda_{r5}$ situées respectivement dans la bande 2 - 3 µm. Dans cette exemple, chaque nano-antenne est soit présente, soit absente, ce qui résulte en 4 combinaisons possibles permettant de former 4 couleurs comme cela est illustré sur les figures 7C et 7D. L'observation peut se faire à travers un polariseur, au moyen d'une caméra infrarouge standard.

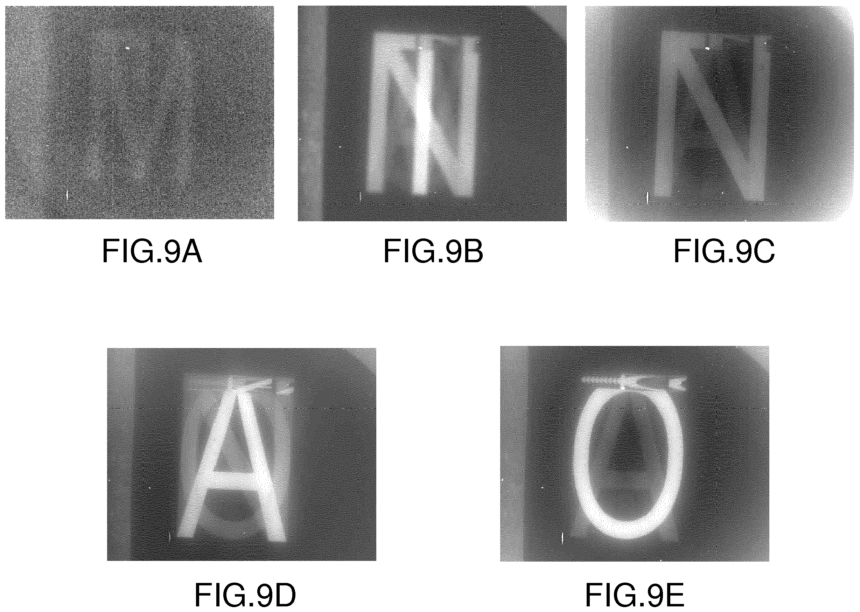

Les figures 8A et 8B, 9A à 9E illustrent l'observation en émission d'un dispositif de codage selon la présente description, réalisé au moyen de nano-antennes plasmoniques de forme parallélépipédique rectangle agencées sur des mailles élémentaires de dimensions 30x30 microns. Dans cet exemple, le substrat est en Silicium, le métal en or, le diélectrique formé de silice. La couche métallique inférieure présente une épaisseur de 200 nm (couche optiquement opaque). L'épaisseur de la couche en diélectrique est de 220 nm. Les plots métalliques ont une épaisseur de 50 nm. Les antennes ont des largeurs de 100 nm et leurs longueurs dans l'une des directions varient entre 900 et 1450 nm, par pas de 50 nm pour coder 11 niveaux de gris en émission selon une polarisation et présentent 5 longueurs différentes dans l'autre direction. La température de l'échantillon est de 373°C pour une émission observable dans la bande spectrale 3 - 5 microns. Dans cet exemple, une première image « Molière » (figure 8A) est codée selon une première polarisation et une deuxième image, formée d'une superposition des lettres « M », « I », « N », « A », « O » est codée selon une deuxième polarisation. Ainsi, les figures 8A et 8B résultent de l'observation en émission du dispositif chauffé au travers de deux polariseurs croisés. Dans ces exemples, le codage du « Molière » est effectué en niveau de gris, en modifiant la longueur du barreau formant la nano-antenne plasmonique, ce qui résulte dans un déplacement de la courbe d'émission de la nano-antenne sur la courbe du corps noir (voir figure 2D) et de ce fait une modification de la réponse optique. Le codage de l'ensemble des lettres est réalisé en niveaux de gris dans 5 bandes spectrales différentes, centrées respectivement 3,20 microns, 3,71 microns, 4,22 microns, 4,73 microns, 5,24 microns. Le niveau de gris est obtenu pour chaque lettre en modifiant la longueur de chaque antenne. Les figures 9A à 9E montrent ainsi l'observation à travers des filtres respectivement centrés sur chacune des longueurs d'onde.

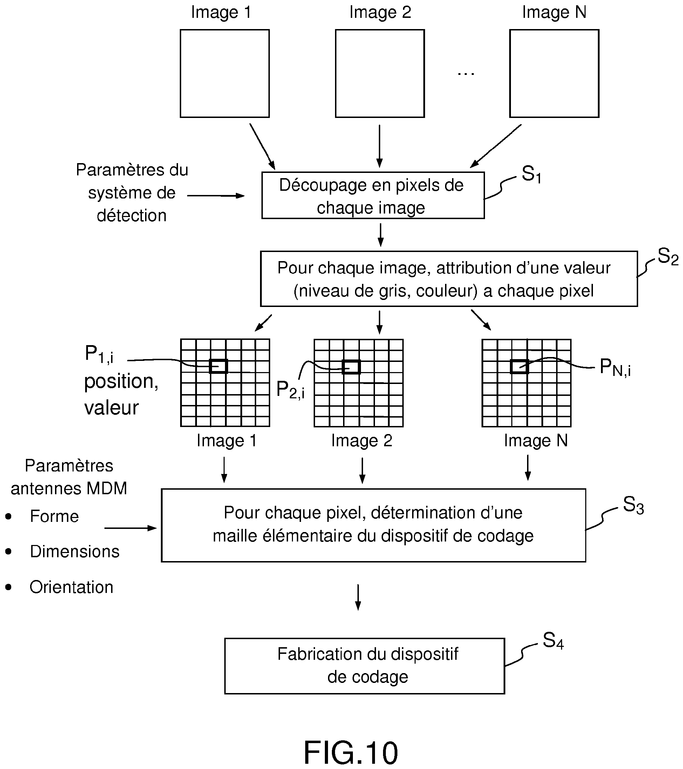

Pour l'ensemble de ces exemples, un procédé de codage tel que représenté sur la figure 10 peut être utilisé.

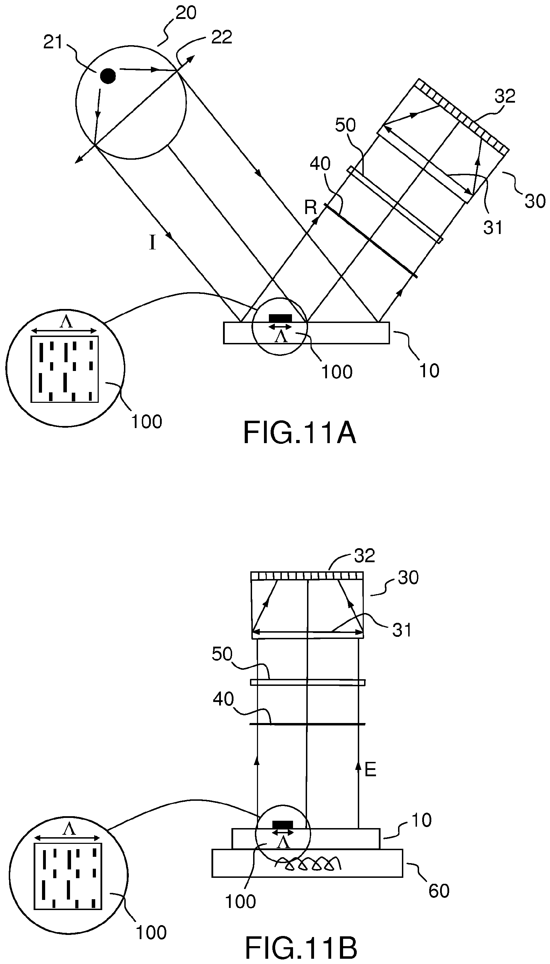

La figure 10 illustre un exemple de procédé de codage d'au moins une information spatiale ou « image » au moyen d'un dispositif de codage selon la présente description, par exemple un dispositif de codage comprenant des nano-antennes plasmoniques telles que décrites précédemment. L'information spatiale est par exemple une information spatiale formant un motif reconnaissable (comme par exemple le « Molière » ou les lettres des figures 8A et 8B), ou une information spatiale formant un code-barres de type QR tel que décrit au moyen des figures 6 et 7A à 7D, ou peut être une image représentative d'une information spatiale monodimensionnelle, par exemple un code barre à une dimension. Dans tous les cas, on cherche à adapter le codage de l'information aux dispositifs d'authentification et notamment aux paramètres du détecteur (bande spectrale de détection, taille du pixel) et de l'optique de focalisation (ouverture numérique de l'objectif), par exemple tels que décrits sur les figures 11A et 11B.

La ou les image(s) sont tout d'abord découpées en pixels ou « pixellisés » (étape S1), la dimension des pixels dépendant des paramètres des systèmes de détection. Pour chaque pixel $P_{j,i}$ de chaque image, où i est la position du pixel dans l'image d'indice j, est attribuée une valeur qui peut être, comme cela a été décrit précédemment, un niveau de gris dans une plage d'observation donnée, ou une « couleur », c'est-à-dire un ensemble de plusieurs valeurs de niveaux de gris pour différentes longueurs d'onde ou plages de longueurs d'onde (étape $S_2$). Puis on détermine (étape $S_3$) la maille élémentaire à la position i sur le support du dispositif de codage qui permettra de former la ou les réponse(s) optique(s) de valeur donnée pour chaque pixel, selon les procédés d'encodage décrits précédemment. La dernière étape (S4) consiste alors à fabriquer le dispositif de codage, selon des méthodes de fabrication connues, par exemple dépôt métallique sur substrat, dépôt de la couche diélectrique, lithographie électronique (mais qui peut être remplacée par une lithographie UV ou nanoimprint) pour la formation des plots métalliques, suivi d'un lift off (voir par exemple Levesque et al. « Plasmonic planar antenna for wideband and efficient linear polarization conversion », Appl. Phys. Lett 104, 111105 (2014)).

Les figures 11A et 11B représentent deux exemples de dispositifs d'authentification de produits sécurisés au moyen de dispositif de codage selon la présente description, pour une authentification respectivement en réflexion et en émission.

Le dispositif d'authentification représenté sur la figure 11A est adapté à une authentification en réflexion d'un dispositif de codage 10 selon la présente description. Le dispositif de codage 10 est par exemple intégré dans un objet à sécuriser (non représenté). Le dispositif d'authentification comprend une voie d'émission avec une source démission 20 pour l'émission d'un faisceau lumineux collimaté I, destiné à éclairer le dispositif de codage 10. La source d'émission comprend par exemple un émetteur 21 et une lentille optique de collimation 22. L'émetteur est adapté à la bande spectrale d'observation recherché. Par exemple l'émetteur est une source lumineuse visible ou une source lumineuse dans l'infrarouge, par exemple une des bandes spectrales 3 - 5 $\mu$m ou 8 -12 $\mu$m correspondant à des bandes de transmission atmosphérique. Le dispositif d'authentification comprend par ailleurs une voie de détection avec un système de détection 30 destiné à recevoir un faisceau R résultant de la réflexion du faisceau I d'éclairage par le dispositif de codage. Le système de détection 30 comprend un élément optique de focalisation 31 qui peut être formé par exemple d'un objectif, d'une lentille optique ou de toute combinaison de ces éléments, et un détecteur 32 pour la détection dans la bande spectrale d'observation. Le détecteur comprend par exemple une caméra CCD ou CMOS pour l'observation dans le visible, avec des tailles de pixels de 1 à 10 $\mu$m. Dans l'infrarouge, les détecteurs peuvent comprendre par exemple : des détecteurs microbolomètres (3 - 14 $\mu$m), des détecteurs MCT bande I (1,5 - 5 $\mu$m), des détecteurs InGaAs (1 - 1,8 $\mu$m). La voie de détection comprend en outre, dans un ou plusieurs modes de réalisation, un ou plusieurs polariseurs 50 et un ou plusieurs filtres spectraux 40. Le système de détection définit une « taille de pixel » limitée par l'ouverture de l'optique de focalisation 31 ou la taille d'un détecteur élémentaire du détecteur 32. La taille de pixel est typiquement de 1 à 10 $\mu$m dans un système de détection visible ; elle est limitée par la limite de diffraction, avec une influence sur le rapport signal à bruit qui décroît lorsque les pixels deviennent petits. La taille de pixel est typiquement de 15 $\mu$m dans un système de détection infrarouge mais devrait descendre à 10 $\mu$m pour les détecteurs de prochaine génération.

Le dispositif d'authentification représenté sur la figure 11B est adapté à une authentification en émission d'un dispositif de codage 10 selon la présente description. Il comprend une voie de détection sensiblement similaire à celle représentée sur la figure 11A mais pas de voie d'émission puisque c'est l'émission thermique du dispositif de codage qui est mesurée et non la réflexion d'une onde optique incidente. Selon un ou plusieurs exemples de réalisation, le dispositif d'authentification comprend des moyens de chauffe 60 permettant une émission thermique à des longueurs d'onde dans les bandes de détection infrarouge classiques.

Dans le visible, les dispositifs de codage peuvent également être authentifiés à l'oeil nu. Ainsi, avec une vision normale, un individu peut distinguer des motifs avec une résolution angulaire de 1 minute d'arc, ce qui correspond pour un objet observé au punctum proximum (typiquement à une distance de 25 cms) à voir des pixels sur l'objet qui font entre 7 et 8 $\mu$m. Il est possible de descendre jusqu'à la limite de diffraction du visible avec des appareils classiques (loupe, microscope).

Bien que décrite à travers un certain nombre d'exemples de réalisation détaillés, le dispositif et le procédé de codage selon la présente description comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Dispositif de codage optique (10, 20, 30, 40) d'une image formée de pixels définis chacun par une position et au moins une valeur, l'image comprenant au moins deux pixels de valeurs différentes, le dispositif de codage étant destiné à être observé dans au moins une première bande spectrale d'observation et comprenant :

    - un support;
    - un ensemble de nano-antennes plasmoniques de type Metal-Dielectrique-Metal formées sur ledit support, telles que :

        - chaque nano-antenne plasmonique est résonante à au moins une longueur d'onde comprise dans ladite première bande spectrale d'observation,
        - les nano-antennes plasmoniques sont agencées spatialement sur le support de telle sorte à ce qu'à un pixel de l'image soit associé un sous-ensemble d'une ou plusieurs nano-antenne(s) plasmonique(s) dont la réponse optique selon une polarisation et dans une bande spectrale comprise dans la première bande spectrale d'observation correspond à une valeur dudit pixel, l'ensemble des nano-antennes plasmoniques formant ainsi au moins un premier codage spatial de ladite image dans ladite première bande spectrale d'observation.

2. Dispositif de codage selon la revendication 1, dans lequel au moins un premier codage spatial comprend un codage en niveaux de gris, ladite réponse optique d'un sous-ensemble d'une ou plusieurs nano-antenne(s) plasmonique(s) associé à un pixel présentant une intensité relative dans une échelle d'intensités correspondant à une valeur d'un pixel définie par un niveau de gris dans une échelle de niveaux de gris.

3. Dispositif de codage selon l'une quelconque des revendications précédentes, dans lequel un pixel de l'image présentant au moins une première et une deuxième valeurs, à chaque pixel de l'image est associé un sous ensemble de nano-antennes présentant selon une polarisation donnée, au moins une première et une deuxième réponses optiques dans respectivement une première et une deuxième bandes spectrales comprises dans la première bande spectrale d'observation, les première et deuxième réponses optiques correspondant aux première et deuxième valeurs du pixel, formant ainsi un codage spatial en couleurs de l'image dans ladite première bande spectrale d'observation.

4. Dispositif de codage selon l'une quelconque des revendications précédentes, dans lequel :

    - l'ensemble des nano-antennes plasmoniques comprend des nano-antennes plasmoniques résonantes dans une première bande spectrale d'observation et des nano-antennes plasmoniques résonantes dans une deuxième bande spectrale;
    - les nano-antennes plasmoniques résonantes dans la première bande spectrale sont agencées spatialement sur le substrat de telle sorte à former un premier codage spatial d'une première image, observable dans la première bande spectrale d'observation, et les nano-antennes plasmoniques résonantes dans la deuxième bande spectrale sont agencées spatialement sur le substrat de telle sorte à former un deuxième codage spatial d'une deuxième image, observable dans la deuxième bande spectrale d'observation.

5. Dispositif de codage selon l'une quelconque des revendications précédentes, dans lequel :

    - l'ensemble de nano-antennes plasmoniques comprend des nano-antennes plasmoniques résonantes selon une première polarisation et des nano-antennes plasmoniques résonantes selon une deuxième polarisation;
    - les nano-antennes plasmoniques résonantes selon la première polarisation sont agencées spatialement sur le substrat de telle sorte à former un premier codage spatial d'une première image, observable dans ladite première bande spectrale d'observation selon la première polarisation, et les nano-antennes plasmoniques résonantes selon la deuxième polarisation sont agencées spatialement sur le substrat de telle sorte à former un deuxième codage spatial d'une deuxième image, observable dans ladite première bande spectrale d'observation selon la deuxième polarisation.

6. Dispositif de codage selon l'une quelconque des revendications précédentes, dans lequel les nano-antennes plasmoniques sont réparties selon des mailles élémentaires (101, 201, 301) de formes et de dimensions similaires, chaque maille élémentaire comprenant un sous-ensemble d'une ou plusieurs nano-antennes plasmoniques présentant une réponse optique correspondant à une valeur d'un pixel de l'image.

7. Dispositif de codage selon la revendication 6, dans lequel les antennes plasmoniques sont réparties selon des premières mailles élémentaires (100) de formes et de dimensions similaires, chacune des premières mailles élémentaires (100) comprenant un sous-ensemble d'une ou plusieurs nano-antenne(s) plasmonique(s) présentant une réponse optique dans une première bande spectrale d'observation correspondant à une valeur d'un pixel d'une première image, et les premières mailles élémentaires sont réparties selon des deuxièmes mailles élémentaires (200) de formes et de dimensions similaires, chacune des deuxièmes mailles élémentaires (200) comprenant un sous-ensemble d'une ou plusieurs nano-antenne(s) plasmonique(s) présentant une réponse optique dans une deuxième bande spectrale d'observation correspondant à une valeur d'un pixel d'une deuxième image.

8. Dispositif de codage selon l'une quelconque des revendications précédentes, dans lequel les nano-antennes plasmoniques sont réparties spatialement sur le substrat pour coder dans une première bande spectrale d'observation et selon une polarisation donnée, au moins une première image formant un code QR.

9. Dispositif de codage selon l'une quelconque des revendications précédentes, dans lequel les nano-antennes plasmoniques sont agencées spatialement sur le substrat pour coder dans une première bande spectrale d'observation et selon une polarisation donnée, au moins une première image formant un motif reconnaissable.

10. Dispositif de codage selon l'une quelconque des revendications précédentes, dans lequel l'ensemble des nano-antennes plasmoniques comprend :

   - une première couche métallique continue (12);
   - une deuxième couche continue en matériau diélectrique (13) formée sur la première couche métallique continue (12) ;
   - Une troisième couche métallique agencée sur la deuxième couche continue en matériau diélectrique (13) et structurée pour former localement des superpositions métal-diélectrique-métal (MDM$_i$) formant lesdites nano-antennes plasmoniques.

11. Dispositif de codage selon la revendication 10, comprenant en outre un substrat (11) formant le support sur lequel est déposée la première couche métallique continue (12).

12. Dispositif de codage selon la revendication 10, dans lequel le support est formé par la première couche métallique continue ou par la deuxième couche en matériau diélectrique (13).

13. Objet sécurisé comprenant un dispositif de codage selon l'une quelconque des revendications précédentes.

14. Procédé de codage dans au moins une première bande spectrale d'observation d'au moins une image, au moyen d'un dispositif de codage selon l'une quelconque des revendications 1 à 12, comprenant :

   - La décomposition de l'image en pixels, chaque pixel présentant une position dans l'image ;
   - l'attribution à chaque pixel d'au moins une valeur de pixel;
   - pour chaque pixel, la détermination d'un sous-ensemble d'une ou plusieurs nano-antenne(s) plasmonique(s) dont la réponse optique selon une polarisation et dans une bande spectrale comprise dans la bande spectrale d'observation correspond à la valeur du pixel ;
   - la réalisation des structures métal-diélectrique-métal sur le support pour la formation de l'ensemble des nano-antennes.

**Patentansprüche**

1. Vorrichtung zur optischen Kodierung (10, 20, 30, 40) eines Bildes, das aus durch eine Position und durch mindestens einen Wert definierten Pixeln besteht, wobei das Bild mindestens zwei Pixel mit unterschiedlichen Werten aufweist, wobei die Kodierungsvorrichtung dazu bestimmt ist, in mindestens einem ersten Beobachtungsspektralband beobachtet zu werden, und Folgendes aufweist:

   - einen Träger;
   - eine Vielzahl plasmonischer Nanoantennen des Typs Metall-Dielektrikum Metall, die derart auf dem Träger ausgebildet sind, dass
   - jede plasmonische Nanoantenne auf mindestens einer im ersten Beobachtungsspektralband enthaltenen Wellenlänge resonant ist,
   - die plasmonischen Nanoantennen räumlich derart auf dem Träger angeordnet sind, dass einem Pixel des Bildes einer Untermenge einer oder mehrerer plasmonischen Nanoantennen zugeordnet ist, deren optische Reaktion entsprechend einer Polarisation und in einem Spektralband, das im ersten Beobachtungsspektralband enthalten ist, einem Wert des Pixels entspricht, wobei die Vielzahl plasmonischer Nanoantennen dadurch mindestens eine erste räumliche Kodierung des Bildes im ersten

**13**

Beobachtungsspektralband bildet.

2. Vorrichtung zur Kodierung nach Anspruch 1, in der mindestens eine erste räumliche Kodierung eine Graustufenkodierung umfasst, wobei die optische Reaktion einer Untermenge einer oder mehrerer einem Pixel zugeordneter plasmonischer Nanoantennen eine relative Intensität aufweist auf einer Intensitätsskale, die einem Wert eines Pixels entspricht, der durch eine Graustufe auf einer Graustufenskala definiert ist.

3. Vorrichtung zur Kodierung nach einem der vorstehenden Ansprüche, in der ein Pixel des Bildes mindestens einen ersten und einen zweiten Wert aufweist, wobei jedem Pixel des Bildes eine Untermenge an Nanoantennen zugeordnet ist, die entsprechend einer gegebenen Polarisation mindestens eine erste und eine zweite optische Reaktion in jeweils einem ersten und einem zweiten Spektralband des Beobachtungsspektralbandes aufweisen, wobei die ersten und zweiten optischen Reaktionen ersten und zweiten Pixelwerten entsprechen, wodurch eine räumliche Farbkodierung des Bildes im ersten Beobachtungsspektralband gebildet wird.

4. Vorrichtung zur Kodierung nach einem der vorstehenden Ansprüche, in der:

   - die Vielzahl plasmonischer Nanoantennen resonante, plasmonische Nanoantennen in einem erste Beobachtungsspektralband aufweist und resonante, plasmonische Nanoantennen in einem zweiten Spektralband;
   - die resonanten, plasmonische Nanoantennen im ersten Spektralband räumlich derart auf dem Substrat angeordnet sind, dass sie eine erste räumliche Kodierung eines erste Bildes bilden, die im ersten Beobachtungsspektralband beobachtet werden kann, und die resonanten, plasmonischen Nanoantennen im zweiten Spektralband räumlich derart auf dem Substrat angeordnet sind, dass sie eine zweite räumliche Kodierung eines zweiten Bildes bilden, die im zweiten Beobachtungsspektralband beobachtet werden kann.

5. Vorrichtung zur Kodierung nach einem der vorstehenden Ansprüche, in der:

   - die Menge plasmonischer Nanoantennen resonante, plasmonische Nanoantennen entsprechend einer ersten Polarisation aufweist und resonante, plasmonische Nanoantennen entsprechend einer zweiten Polarisation;
   - die resonanten, plasmonischen Nanoantennen entsprechend der erste Polarisation räumlich derart auf dem Substrat angeordnet sind, dass sie eine erste räumliche Kodierung eines ersten Bildes bilden, die im ersten Beobachtungsspektralband entsprechend der ersten Polarisation beobachtet werden kann, und die resonanten, plasmonischen Nanoantennen entsprechend der zweiten Polarisation räumlich derart auf dem Substrat angeordnet sind, dass sie eine zweite räumliche Kodierung eines zweiten Bildes bilden, die im zweiten Beobachtungsspektralband entsprechend der zweiten Polarisation beobachtet werden kann.

6. Vorrichtung zur Kodierung nach einem der vorstehenden Ansprüche, in der die plasmonischen Nanoantennen nach Elementarzellen (101, 201, 301) ähnlicher Formen und Dimensionen verteilt sind, wobei jede Elementarzellen eine Untermenge einer oder mehrere plasmonischer Nanoantennen aufweist mit einer einem Wert eines Pixels des Bildes entsprechenden optischen Reaktion.

7. Vorrichtung zur Kodierung nach Anspruch 6, in der die plasmonischen Antennen nach ersten Elementarzellen (100) ähnlicher Formen und Dimensionen verteilt sind, wobei jede der ersten Elementarzellen (100) eine Untermenge einer oder mehrerer plasmonischer Nanoantennen aufweist mit einer optischen Reaktion in einem ersten Beobachtungsspektralband, die einem Wert eines Pixels eines ersten Bildes entspricht, und die ersten Elementarzellen nach zweiten Elementarzellen (200) ähnlicher Formen und Dimensionen verteilt sind, wobei jede der zweiten Elementarzellen (200) eine Untermenge einer oder mehrerer Nanoantennen aufweist mit einer optischen Reaktion in einem zweiten Beobachtungsspektralband, die einem Wert eines Pixels eines zweiten Bildes entspricht.

8. Vorrichtung zur Kodierung nach einem der vorstehenden Ansprüche, in der die plasmonischen Nanoantennen räumlich auf dem Substrat verteilt sind, um in einem ersten Beobachtungsspektralband und entsprechend einer gegebenen Polarisation zu kodieren, wobei mindestens ein erstes Bild einen QR-Code bildet.

9. Vorrichtung zur Kodierung nach einem der vorstehenden Ansprüche, in der die plasmonischen Nanoantennen räumlich auf dem Substrat angeordnet sind, um in einem ersten Beobachtungsspektralband und entsprechend einer gegebenen Polarisation zu kodieren, wobei mindestens ein erstes Bild ein erkennbares Motiv bildet.

10. Vorrichtung nach einem der vorstehenden Ansprüche, in der die Menge plasmonischer Nanoantennen Folgendes aufweist:

- eine erste durchgängige Metallschicht (12);
- eine zweite durchgängige Schicht aus dielektrischem Material (13), die auf der ersten durchgängigen Metallschicht (12) ausgebildet ist;
- eine dritte Metallschicht, die auf der zweiten durchgängigen Schicht aus dielektrischem Material (13) angeordnet ist und strukturiert ist, um lokal Metall-Dielektrikum-Metall-Überlagerungen ($MDM_i$) zu bilden, welche die plasmonische Nanoantennen bilden.

11. Vorrichtung zur Kodierung nach Anspruch 10, die ferner ein Substrat (11) aufweist, das den Träger bildet, auf dem sich die erste durchgängige Metallschicht (12) befindet.

12. Vorrichtung zur Kodierung nach Anspruch 10, in welcher der Träger aus der ersten durchgängigen Metallschicht gebildet wird oder aus der zweiten Schicht aus dielektrischem Material (13).

13. Gesichertes Objekt, das eine Vorrichtung zur Kodierung nach einem der vorstehenden Ansprüche aufweist.

14. Kodierungsverfahren in mindestens einem erstem Beobachtungsspektralband mindestens eines Bildes mittels einer Vorrichtung zur Kodierung nach einem der vorstehenden Ansprüche 1 bis 12, das umfasst:

- Zerlegen des Bildes in Pixel, wobei jedes Pixel eine Position im Bild darstellt ;
- Zuordnen von mindestens einem Pixelwert zu jedem Pixel;
- für jedes Pixel Bestimmen einer Untermenge einer oder mehrerer plasmonischer Nanoantennen, deren optische Reaktion entsprechend einer Polarisation und in einem Spektralband, das im ersten Beobachtungsspektralband enthalten ist, einem Wert des Pixels entspricht;
- Realisieren der Metall-Dielektrikum-Metall-Strukturen auf dem Träger zur Bildung der Menge an Nanoantennen.

**Claims**

1. An optical encoding device (10, 20, 30, 40) of an image formed of pixels each defined by a position and at least one value, the image comprising at least two pixels of different values, the encoding device being intended to be observed in at least a first spectral band of observation and comprising:

- a supporting structure;
- a set of plasmonic nanoantennas of the metal-dielectric-metal type formed on said supporting structure, such as:

- each plasmonic nanoantenna is resonant to at least one wavelength comprised in said first spectral band of observation,
- the plasmonic nanoantennas are arranged spatially on the supporting structure so that at one pixel of the image, a subset of one or more plasmonic nanoantenna(s) is associated, whose optical response according to a polarization and in a spectral band comprised in the first spectral band of observation corresponds to the value of said pixel, the set of plasmonic nanoantennas thus forming at least a first spatial coding of said image in said first spectral band of observation.

2. The encoding device according to claim 1, wherein at least a first spatial encoding comprises a grayscale coding, said optical response of a subset of one or more plasmonic nanoantenna(s) associated with a pixel having a relative intensity in a scale of intensities corresponding to a pixel value defined by a gray level in a scale of gray levels.

3. The encoding device according to any of the preceding claims, wherein a pixel of the image having at least a first and a second value, a subset of nanoantennas is associated with each pixel of the image, wherein said subset of nanoantennas has, according to a given polarization, at least a first and a second optical responses respectively in a first and second spectral bands comprised in the first spectral band of observation, the first and second optical responses corresponding to the first and second values of the pixel, thus forming a spatial color coding of the image in said first spectral band of observation.

4. The encoding device according to any of the preceding claims, wherein:

- the set of plasmonic nanoantennas comprises resonant plasmonic nanoantennas in a first spectral band of observation and resonant plasmonic nanoantennas in a second spectral band;
- the resonant plasmonic nanoantennas in the first spectral band are arranged spatially on the substrate so as to form a first spatial encoding of a first image, observable in the first spectral band of observation, and the resonant plasmonic nanoantennas in the second spectral band are arranged spatially on the substrate so as to form a second spatial encoding of a second image, observable in the second spectral band of observation.

5. The encoding device according to any of the preceding claims, wherein:

- the set of plasmonic nanoantennas comprises resonant plasmonic nanoantennas according to a first polarization and resonant plasmonic nanoantennas according to a second polarization;
- the resonant plasmonic nanoantennas according to the first polarization are arranged spatially on the substrate in such a way as to form a first spatial encoding of a first image, observable in said first spectral band of observation according to the first polarization, and the resonant plasmonic nanoantennas according to the second polarization are arranged spatially on the substrate so as to form a second spatial encoding of a second image, observable in said first spectral band of observation according to the second polarization.

6. The encoding device according to any of the preceding claims, wherein the plasmonic nanoantennas are distributed in elementary cells (101, 201, 301) of similar shapes and dimensions, each elementary cell comprising a subset of one or more plasmonic nanoantennas having an optical response corresponding to a value of one pixel of the image.

7. The encoding device according to claim 6, wherein the plasmonic antennas are distributed according to first elementary cells (100) of similar shapes and dimensions, each of the first elementary cells (100) comprising a subset of one or more plasmonic nanoantenna(s) presenting an optical response in a first spectral band of observation corresponding to a value of one pixel of a first image, and the first elementary cells are distributed in second elementary cells (200) of similar shapes and dimensions, each of the second elemental cells (200) comprising a subset of one or more plasmonic nanoantenna(s) having an optical response in a second spectral band of observation corresponding to a value of one pixel of a second image.

8. The encoding device according to any of the preceding claims, wherein the plasmonic nanoantennas are spatially distributed on the substrate to encode in a first spectral band of observation and according to a given polarization, at least a first image forming a QR code.

9. The encoding device according to any of the preceding claims, wherein the plasmonic nanoantennas are spatially arranged on the substrate to encode in a first spectral band of observation and according to a given polarization, at least a first image forming a recognizable pattern.

10. The encoding device according to any of the preceding claims, wherein all the plasmonic nanoantennas comprise:

- a first continuous metal layer (12);
- a second continuous layer of dielectric material (13) formed on the first continuous metal layer (12);
- A third metal layer arranged on the second continuous dielectric material layer (13) and structured to locally form metal-dielectric-metal stacks ($MDM_i$) forming said plasmonic nanoantennas.

11. The encoding device according to claim 10, further comprising a substrate (11) forming the supporting structure on which is deposited the first continuous metal layer (12).

12. The encoding device according to claim 10, wherein the supporting structure is formed by the first continuous metal layer or by the second layer of dielectric material (13).

13. A secured object comprising an encoding device according to any one of the preceding claims.

14. An encoding method in at least a first spectral band of observation of at least one image, by means of an encoding device according to any one of claims 1 to 12, comprising:

- decomposition of the image into pixels, each pixel having a position in the image;
- each pixel is assigned the value of at least one pixel;
- for each pixel, the determination of a subset of one or more plasmonic nanoantenna(s) whose optical response according to a polarization and in a spectral band comprised in the spectral band of observation corresponds to the value of the pixel;
- the production of the metal-dielectric-metal structures on the supporting structure to form all the nanoantennas.

FIG.1A

EP 3 325 280 B1

FIG.1B

EP 3 325 280 B1

FIG.2A

FIG.2B

FIG.2C

corps noir 373K

FIG.2D

FIG.2E

FIG.3A

FIG.3B

FIG.3C

FIG.3D

FIG.3E

FIG.3F

FIG.3G

FIG.3H

FIG.4A

FIG.4B

FIG.4C

FIG.4D

FIG.5A

EP 3 325 280 B1

FIG.5B

FIG.6

P$_1$  Polarisation Horizontale (Visible)

| | | | | | | | | | | | | | | |
|---|---|---|---|---|---|---|---|---|---|---|---|---|---|---|
| 3 | 6 | 5 | 8 | 6 | 6 | 5 | 6 | 5 | 6 | 7 | 3 | 1 | 2 | 1 | 2 |
| 3 | 7 | 3 | 4 | 6 | 4 | 8 | 4 | 2 | 1 | 4 | 4 | 6 | 4 | 8 | 8 |
| 2 | 2 | 4 | 1 | 4 | 3 | 6 | 8 | 6 | 3 | 2 | 1 | 2 | 8 | 2 | 2 |
| 3 | 6 | 3 | 8 | 8 | 2 | 4 | 2 | 4 | 7 | 7 | 6 | 5 | 7 | 4 | 1 |
| 5 | 5 | 5 | 2 | 5 | 6 | 4 | 3 | 4 | 2 | 4 | 7 | 8 | 5 | 2 | 1 |
| 3 | 7 | 2 | 5 | 6 | 6 | 5 | 2 | 4 | 6 | 8 | 6 | 1 | 6 | 3 | 4 |
| 1 | 2 | 1 | 8 | 1 | 4 | 2 | 7 | 6 | 1 | 7 | 6 | 5 | 6 | 5 | 4 |
| 3 | 4 | 2 | 5 | 1 | 3 | 7 | 8 | 6 | 1 | 2 | 3 | 7 | 2 | 5 | 2 |
| 7 | 5 | 7 | 6 | 2 | 5 | 4 | 8 | 7 | 8 | 5 | 5 | 4 | 5 | 6 | 8 |
| 3 | 5 | 3 | 5 | 2 | 6 | 5 | 5 | 5 | 8 | 2 | 6 | 2 | 7 | 8 | 7 |
| 8 | 5 | 8 | 8 | 1 | 3 | 4 | 7 | 6 | 3 | 8 | 3 | 5 | 2 | 3 | 6 |
| 4 | 3 | 5 | 3 | 3 | 1 | 2 | 7 | 3 | 4 | 2 | 5 | 1 | 3 | 3 | 2 |
| 1 | 3 | 6 | 5 | 8 | 5 | 3 | 4 | 4 | 1 | 8 | 2 | 5 | 7 | 3 | 2 |
| 8 | 4 | 7 | 5 | 5 | 8 | 2 | 2 | 3 | 3 | 8 | 8 | 8 | 1 | 2 | 8 |
| 8 | 8 | 6 | 2 | 3 | 6 | 6 | 1 | 2 | 2 | 2 | 5 | 6 | 5 | 6 | 2 |
| 5 | 8 | 3 | 6 | 1 | 2 | 2 | 8 | 4 | 6 | 5 | 7 | 1 | 7 | 3 | 6 |

**FIG.7A**

| | |
|---|---|
| 1 = Blanc | 5 = Rose |
| 2 = Bleu clair | 6 = Rouge |
| 3 = Jaune | 7 = Bleu foncé |
| 4 = Vert | 8 = Noir |

P'$_1$  Polarisation Verticale (Visible)

| | | | | | | | | | | | | | | |
|---|---|---|---|---|---|---|---|---|---|---|---|---|---|---|
| 6 | 3 | 6 | 4 | 1 | 7 | 6 | 7 | 3 | 2 | 6 | 8 | 1 | 6 | 1 | 6 |
| 2 | 3 | 3 | 8 | 6 | 5 | 1 | 7 | 8 | 8 | 1 | 2 | 1 | 7 | 3 | 4 |
| 8 | 5 | 6 | 2 | 7 | 2 | 2 | 3 | 8 | 2 | 7 | 7 | 1 | 8 | 3 | 5 |
| 5 | 1 | 4 | 4 | 1 | 3 | 2 | 3 | 1 | 2 | 1 | 7 | 2 | 5 | 3 | 8 |
| 8 | 5 | 8 | 7 | 1 | 4 | 8 | 7 | 8 | 2 | 2 | 4 | 3 | 4 | 1 | 7 |
| 6 | 5 | 7 | 8 | 4 | 5 | 2 | 3 | 5 | 3 | 3 | 5 | 7 | 6 | 1 | 1 |
| 4 | 8 | 1 | 1 | 6 | 2 | 3 | 4 | 5 | 8 | 2 | 6 | 3 | 7 | 7 | 6 |
| 8 | 1 | 8 | 4 | 5 | 3 | 8 | 3 | 1 | 5 | 2 | 1 | 6 | 6 | 4 | 5 |
| 5 | 3 | 8 | 4 | 3 | 5 | 3 | 6 | 1 | 4 | 5 | 5 | 6 | 3 | 7 | 3 |
| 2 | 5 | 3 | 4 | 8 | 6 | 7 | 5 | 5 | 2 | 1 | 1 | 4 | 4 | 7 | 1 |
| 8 | 7 | 2 | 1 | 2 | 6 | 7 | 5 | 6 | 3 | 7 | 2 | 1 | 7 | 3 | 8 |
| 4 | 8 | 6 | 3 | 5 | 4 | 1 | 1 | 4 | 5 | 6 | 2 | 3 | 2 | 2 | 2 |
| 2 | 5 | 5 | 6 | 6 | 2 | 8 | 3 | 7 | 8 | 6 | 7 | 5 | 6 | 1 | 6 |
| 4 | 3 | 2 | 7 | 2 | 1 | 5 | 3 | 8 | 4 | 7 | 2 | 8 | 8 | 2 | 7 |
| 5 | 8 | 2 | 1 | 2 | 2 | 1 | 4 | 1 | 1 | 1 | 5 | 8 | 5 | 4 | 4 |
| 5 | 4 | 4 | 4 | 3 | 5 | 6 | 5 | 2 | 7 | 7 | 7 | 7 | 3 | 7 | 5 |

**FIG.7B**

| | |
|---|---|
| 1 = Blanc | 5 = Rose |
| 2 = Bleu clair | 6 = Rouge |
| 3 = Jaune | 7 = Bleu foncé |
| 4 = Vert | 8 = Noir |

$Q_1$ Polarisation Horizontale (Infrarouge)

| 2 | 1 | 4 | 3 | 3 | 2 | 4 | 3 |
|---|---|---|---|---|---|---|---|
| 4 | 4 | 1 | 3 | 4 | 1 | 1 | 4 |
| 4 | 3 | 4 | 3 | 3 | 3 | 3 | 1 |
| 3 | 1 | 4 | 2 | 2 | 2 | 3 | 4 |
| 2 | 1 | 2 | 3 | 2 | 4 | 4 | 4 |
| 1 | 4 | 4 | 4 | 3 | 4 | 3 | 2 |
| 1 | 2 | 4 | 4 | 1 | 3 | 3 | 4 |
| 2 | 1 | 2 | 1 | 2 | 4 | 3 | 3 |

**FIG.7C**

1 = Blanc
2 = Gris clair
3 = Gris foncé
4 = Noir

$Q'_1$ Polarisation Verticale (Infrarouge)

| 1 | 3 | 4 | 1 | 2 | 2 | 3 | 1 |
|---|---|---|---|---|---|---|---|
| 2 | 4 | 2 | 3 | 4 | 1 | 3 | 3 |
| 1 | 1 | 4 | 1 | 1 | 1 | 2 | 2 |
| 4 | 1 | 2 | 2 | 1 | 2 | 3 | 2 |
| 3 | 3 | 3 | 4 | 4 | 1 | 4 | 4 |
| 4 | 2 | 4 | 1 | 3 | 1 | 2 | 2 |
| 1 | 1 | 4 | 1 | 4 | 4 | 4 | 3 |
| 2 | 4 | 1 | 1 | 2 | 3 | 4 | 4 |

**FIG.7D**

1 = Blanc
2 = Gris clair
3 = Gris foncé
4 = Noir

FIG.8A

FIG.8B

FIG.9A

FIG.9B

FIG.9C

FIG.9D

FIG.9E

EP 3 325 280 B1

Image 1        Image 2        Image N

...

Paramètres du
système de ⟶
détection

Découpage en pixels de
chaque image    $S_1$

Pour chaque image, attribution d'une valeur
(niveau de gris, couleur) a chaque pixel    $S_2$

$P_{1,i}$
position,
valeur

$P_{2,i}$

$P_{N,i}$

Image 1        Image 2        Image N

Paramètres
antennes MDM

- Forme

- Dimensions

- Orientation

Pour chaque pixel, détermination d'une
maille élémentaire du dispositif de codage    $S_3$

Fabrication du dispositif
de codage    $S_4$

FIG.10

**FIG.11A**

**FIG.11B**

## RÉFÉRENCES CITÉES DANS LA DESCRIPTION

**Documents brevets cités dans la description**

- US 20120015118 A

- WO 2013039454 A1

**Littérature non-brevet citée dans la description**

- Plasmonic and metamaterial structures as electro-magnetic absorbers. **CUI et al.** LASER PHOTONICS REV. Wiley, 2014, vol. 8, 495-520
- **CUI et al.** *Laser & Photonics Review,* 2014, 500-502

- **CUI et al.** *Laser & Photonics Review,* 2014, vol. 8, 495
- Plasmonic planar antenna for wideband and efficient linear polarization conversion. *Appl. Phys. Lett,* 2014, vol. 104, 111105